(19) **Europäisches Patentamt**
**European Patent Office**
**Office européen des brevets**

(11) **EP 4 236 487 A1**

(12) **EUROPEAN PATENT APPLICATION**
published in accordance with Art. 153(4) EPC

(43) Date of publication:
**30.08.2023 Bulletin 2023/35**

(51) International Patent Classification (IPC):
**H04W 52/14** (2009.01)   **H04W 52/36** (2009.01)
**H04W 52/24** (2009.01)   **H04L 5/14** (2006.01)
**H04W 84/04** (2009.01)

(21) Application number: **21883373.9**

(22) Date of filing: **25.10.2021**

(52) Cooperative Patent Classification (CPC):
**H04L 5/14; H04W 52/14; H04W 52/24;**
**H04W 52/36; H04W 84/04**

(86) International application number:
**PCT/KR2021/015032**

(87) International publication number:
**WO 2022/086306 (28.04.2022 Gazette 2022/17)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **23.10.2020   KR 20200138110**
            **13.01.2021   KR 20210004618**
            **18.10.2021   KR 20210138766**

(71) Applicant: **LG Electronics Inc.**
**Yeongdeungpo-gu**
**Seoul 07336 (KR)**

(72) Inventors:
• **SHIM, Jaenam**
  **Seoul 06772 (KR)**
• **KO, Hyunsoo**
  **Seoul 06772 (KR)**
• **YOU, Hyangsun**
  **Seoul 06772 (KR)**

(74) Representative: **Frenkel, Matthias Alexander**
**Wuesthoff & Wuesthoff**
**Patentanwälte PartG mbB**
**Schweigerstraße 2**
**81541 München (DE)**

(54) **POWER CONTROL FOR UPLINK TRANSMISSION**

(57)   The present application proposes a power control method for IAB node MT (IAB-MT). As one example of the method proposed in the present application, a maximum output power according to the type of resources may be configured. As another example of the method proposed in the present application, the type of resource on the basis of a cell-specific configuration may be overridden with the type of resource on the basis of a device-specific configuration. Further, the method may be applied to a terminal functionally identical to IAB-MT.

FIG. 14

## Description

### TECHNICAL FIELD

The present disclosure relates to wireless communication.

### BACKGROUND ART

As more and more communication devices require more communication capacity, there is a need for improved mobile broadband communication compared to the existing radio access technology (RAT). Further, massive machine type communications (MTC) providing various services anytime anywhere by connecting many devices and objects is one of major issues to be considered in next-generation communication. In addition, there is ongoing discussion on communication system design considering a service/terminal sensitive to reliability and latency. The introduction of next-generation radio access technology considering enhanced mobile broadband communication (eMBB), massive MTC, ultra-reliable and low latency communication (URLLC), or the like is discussed. This technology is called new RAT or NR in the present disclosure for convenience.

One potential technology aimed at enabling future cellular network deployment scenarios and applications is support for wireless backhaul and relay links. This enables flexible and highly dense deployment of NR cells without the need to proportionally densify the transport network.

It is expected that greater bandwidth in NR compared to LTE with the native deployment of massive MIMO or multi-beam systems will be available. Thus (e.g., mmWave spectrum) creates opportunities for the development and deployment of integrated access and backhaul links. This makes it easier for a deployment of a dense network of self-backhauled NR cells in a more integrated manner by establishing multiple control and data channels/procedures defined to provide access or access to the terminals. Such systems are referred to as integrated access and backhaul links (IAB).

In the next-generation communication system, introduction of simultaneous operation of IAB nodes is considered. The concurrent operation may mean that an operation of an IAB node MT (IAB-MT) and an operation of an IAB node DU (IAB-DU) are simultaneously performed in one IAB node. When IAB nodes perform concurrent operations, interference may further intensify.

### DISCLOSURE

### TECHNICAL SOLUTION

The present specification proposes a power control method for an IAB node MT (IAB-MT). Furthermore, the method can be applied to a terminal/UE functionally identical to that of the IAB-MT.

### ADVANTAGEOUS EFFECTS

According to the present specification, the interference level between communication devices can be reduced in a full duplex terminal/UE, SBFD/SFFD environment, etc. through various power control methods proposed in the present specification.

Effects that can be obtained through a specific example of the present specification are not limited to the aforementioned effects. For example, there may be various technical effects that can be understood or derived by a person having ordinary skill in the related art from the present specification. Accordingly, specific effects of the present specification are not limited to those explicitly described in the present specification, and may include various effects that can be understood or derived from technical features of the present specification.

### BRIEF DESCRIPTION OF THE DRAWINGS

The following drawings were created to explain a specific example of the present specification. Since the names of specific devices described in the drawings or the names of specific signals/messages/fields are presented by way of example, the technical features of the present specification are not limited to the specific names used in the following drawings.

FIG. 1 shows a wireless communication system to which the present disclosure can be applied.
FIG. 2 is a diagram showing a wireless protocol architecture for a user plane.
FIG. 3 is a diagram showing a wireless protocol architecture for a control plane.
FIG. 4 shows another example of a wireless communication system to which the technical features of the present disclosure can be applied.

FIG. 5 illustrates a functional division between an NG-RAN and a 5GC.

FIG. 6 illustrates an example of a frame structure that may be applied in NR.

FIG. 7 illustrates a slot structure.

FIG. 8 schematically illustrates an example for a network with integrated access and backhaul links (IAB).

FIG. 9 shows an example of the operation of the IAB system in a standalone (SA) mode and a non-standalone (NSA) mode.

FIG. 10 schematically illustrates an example of a configuration of access and backhaul links.

FIG. 11 explains links and relationships between IAB nodes.

FIG. 12 schematically illustrates an example of SB-FD and SS-FD.

FIG. 13 schematically illustrates an example in which time resource operating in half duplex (HD) and time resource operating in full duplex (FD) such as SB-FD or SS-FD coexist.

FIG. 14 is a flowchart of an example of an uplink transmission method of a first communication device according to some implementations of the present specification.

FIG. 15 is a flowchart of an example of a method of receiving an uplink signal by a second communication device according to some implementations of the present specification.

FIG. 16 illustrates a communication system 1 applied to the present disclosure.

FIG. 17 illustrates a wireless device applicable to the present disclosure.

FIG. 18 illustrates a signal processing circuit for a transmission signal.

FIG. 19 shows another example of a wireless device applied to the present disclosure.

FIG. 20 illustrates a portable device applied to the present disclosure.

FIG. 21 illustrates a vehicle or autonomous vehicle to which the present disclosure is applied.

FIG. 22 illustrates a vehicle to which the present disclosure is applied.

FIG. 23 illustrates an XR instrument applicable to the present disclosure.

FIG. 24 illustrates a robot applied to the present disclosure.

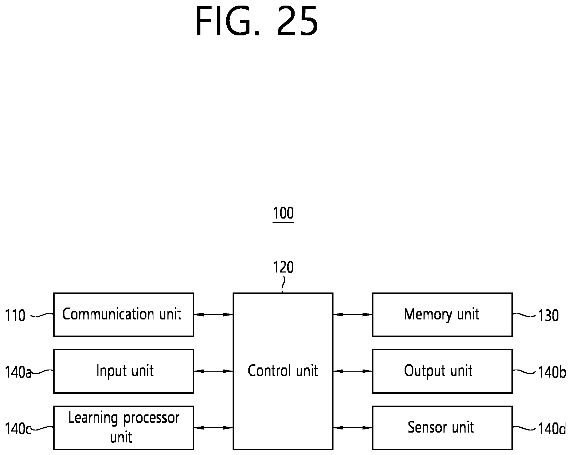

FIG. 25 illustrates an AI device applied to the present disclosure.

## DETAILED DESCRIPTION

As used herein, "A or B" may mean "only A", "only B", or "both A and B". That is, "A or B" may be interpreted as "A and/or B" herein. For example, "A, B or C" may mean "only A", "only B", "only C", or "any combination of A, B, and C".

As used herein, a slash (/) or a comma (,) may mean "and/or". For example, "A/B" may mean "A and/or B". Therefore, "A/B" may include "only A", "only B", or "both A and B". For example, "A, B, C" may mean "A, B, or C".

As used herein, "at least one of A and B" may mean "only A", "only B", or "both A and B". Further, as used herein, "at least one of A or B" or "at least one of A and/or B" may be interpreted equally as "at least one of A and B".

As used herein, "at least one of A, B, and C" may mean "only A", "only B", "only C", or "any combination of A, B, and C". Further, "at least one of A, B, or C" or "at least one of A, B, and/or C" may mean "at least one of A, B, and C".

As used herein, parentheses may mean "for example". For instance, the expression "control information (PDCCH)" may mean that a PDCCH is proposed as an example of control information. That is, control information is not limited to a PDCCH, but a PDCCH is proposed as an example of control information. Further, the expression "control information (i.e., a PDCCH)" may also mean that a PDCCH is proposed as an example of control information.

Technical features individually described within a drawing in the present disclosure may be implemented individually or may be implemented simultaneously.

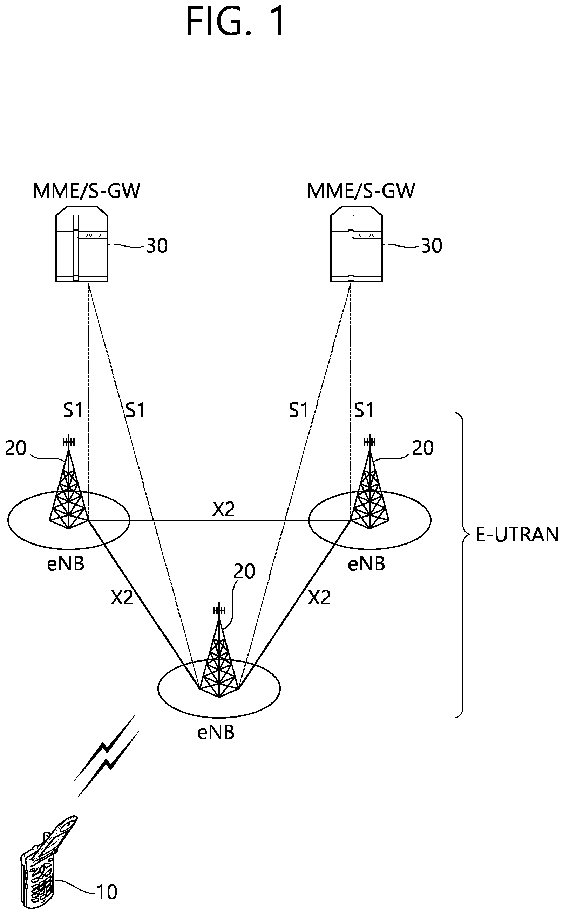

FIG. 1 shows a wireless communication system to which the present disclosure may be applied. The wireless communication system may be referred to as an Evolved-UMTS Terrestrial Radio Access Network (E-UTRAN) or a Long Term Evolution (LTE)/LTE-A system.

The E-UTRAN includes at least one base station (BS) 20 which provides a control plane and a user plane to a user equipment (UE) 10. The UE 10 may be fixed or mobile, and may be referred to as another terminology, such as a mobile station (MS), a user terminal (UT), a subscriber station (SS), a mobile terminal (MT), a wireless device, etc. The BS 20 is generally a fixed station that communicates with the UE 10 and may be referred to as another terminology, such as an evolved node-B (eNB), a base transceiver system (BTS), an access point, etc.

The BSs 20 are interconnected by means of an X2 interface. The BSs 20 are also connected by means of an S1 interface to an evolved packet core (EPC) 30, more specifically, to a mobility management entity (MME) through S1-MME and to a serving gateway (S-GW) through S1-U.

The EPC 30 includes an MME, an S-GW, and a packet data network-gateway (P-GW). The MME has access information of the UE or capability information of the UE, and such information is generally used for mobility management of the UE. The S-GW is a gateway having an E-UTRAN as an end point. The P-GW is a gateway having a PDN as an end point.

Layers of a radio interface protocol between the UE and the network can be classified into a first layer (L1), a second layer (L2), and a third layer (L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

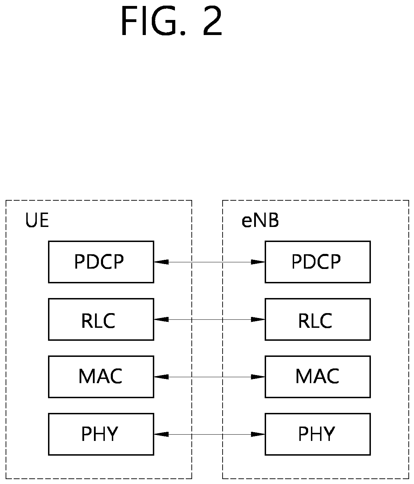

FIG. 2 is a diagram showing a wireless protocol architecture for a user plane.

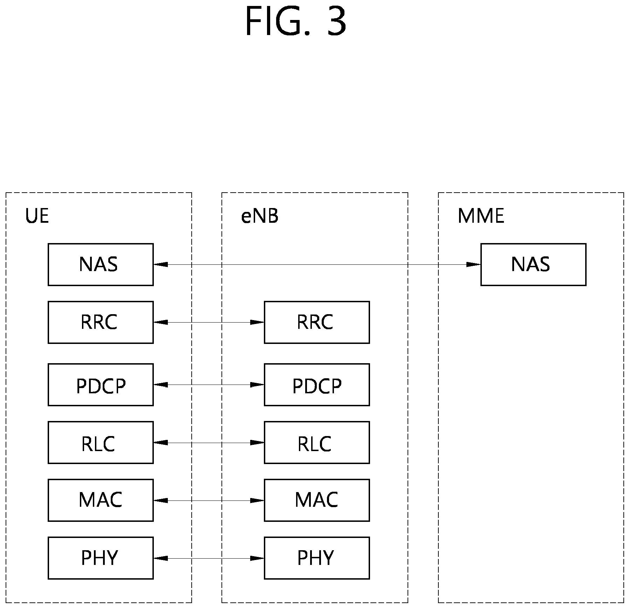

FIG. 3 is a diagram showing a wireless protocol architecture for a control plane. The user plane is a protocol stack for user data transmission. The control plane is a protocol stack for control signal transmission.

Referring to FIGs. 2 and 3, a PHY layer provides an upper layer with an information transfer service through a physical channel. The PHY layer is connected to a medium access control (MAC) layer which is an upper layer of the PHY layer through a transport channel. Data is transferred between the MAC layer and the PHY layer through the transport channel. The transport channel is classified according to how and with what characteristics data is transferred through a radio interface.

Data is moved between different PHY layers, that is, the PHY layers of a transmitter and a receiver, through a physical channel. The physical channel may be modulated according to an Orthogonal Frequency Division Multiplexing (OFDM) scheme, and use the time and frequency as radio resources.

The functions of the MAC layer include mapping between a logical channel and a transport channel and multiplexing and demultiplexing to a transport block that is provided through a physical channel on the transport channel of a MAC Service Data Unit (SDU) that belongs to a logical channel. The MAC layer provides service to a Radio Link Control (RLC) layer through the logical channel.

The functions of the RLC layer include the concatenation, segmentation, and reassembly of an RLC SDU. In order to guarantee various types of Quality of Service (QoS) required by a Radio Bearer (RB), the RLC layer provides three types of operation mode: Transparent Mode (TM), Unacknowledged Mode (UM), and Acknowledged Mode (AM). AM RLC provides error correction through an Automatic Repeat Request (ARQ).

The RRC layer is defined only on the control plane. The RRC layer is related to the configuration, reconfiguration, and release of radio bearers, and is responsible for control of logical channels, transport channels, and PHY channels. An RB means a logical route that is provided by the first layer (PHY layer) and the second layers (MAC layer, the RLC layer, and the PDCP layer) in order to transfer data between UE and a network.

The function of a Packet Data Convergence Protocol (PDCP) layer on the user plane includes the transfer of user data and header compression and ciphering. The function of the PDCP layer on the user plane further includes the transfer and encryption/integrity protection of control plane data.

What an RB is configured means a process of defining the characteristics of a wireless protocol layer and channels in order to provide specific service and configuring each detailed parameter and operating method. An RB can be divided into two types of a Signaling RB (SRB) and a Data RB (DRB). The SRB is used as a passage through which an RRC message is transmitted on the control plane, and the DRB is used as a passage through which user data is transmitted on the user plane.

If RRC connection is established between the RRC layer of UE and the RRC layer of an E-UTRAN, the UE is in the RRC connected state. If not, the UE is in the RRC idle state.

A downlink transport channel through which data is transmitted from a network to UE includes a broadcast channel (BCH) through which system information is transmitted and a downlink shared channel (SCH) through which user traffic or control messages are transmitted. Traffic or a control message for downlink multicast or broadcast service may be transmitted through the downlink SCH, or may be transmitted through an additional downlink multicast channel (MCH). Meanwhile, an uplink transport channel through which data is transmitted from UE to a network includes a random access channel (RACH) through which an initial control message is transmitted and an uplink shared channel (SCH) through which user traffic or control messages are transmitted.

Logical channels that are placed over the transport channel and that are mapped to the transport channel include a broadcast control channel (BCCH), a paging control channel (PCCH), a common control channel (CCCH), a multicast control channel (MCCH), and a multicast traffic channel (MTCH).

The physical channel includes several OFDM symbols in the time domain and several subcarriers in the frequency domain. One subframe includes a plurality of OFDM symbols in the time domain. An RB is a resources allocation unit, and includes a plurality of OFDM symbols and a plurality of subcarriers. Furthermore, each subframe may use specific subcarriers of specific OFDM symbols (e.g., the first OFDM symbol) of the corresponding subframe for a physical downlink control channel (PDCCH), that is, an L1/L2 control channel. A Transmission Time Interval (TTI) is a unit time for transmission, e.g., a subframe or a slot.

Hereinafter, a new radio access technology (new RAT, NR) will be described.

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/UE is being discussed. The introduction of next generation radio access technology considering enhanced mobile broadband communication (eMBB), massive MTC (mMTC), ultrareliable and low latency communication (URLLC) is discussed. This new technology may be called new radio access technology (new RAT or NR) in the present disclosure for convenience.

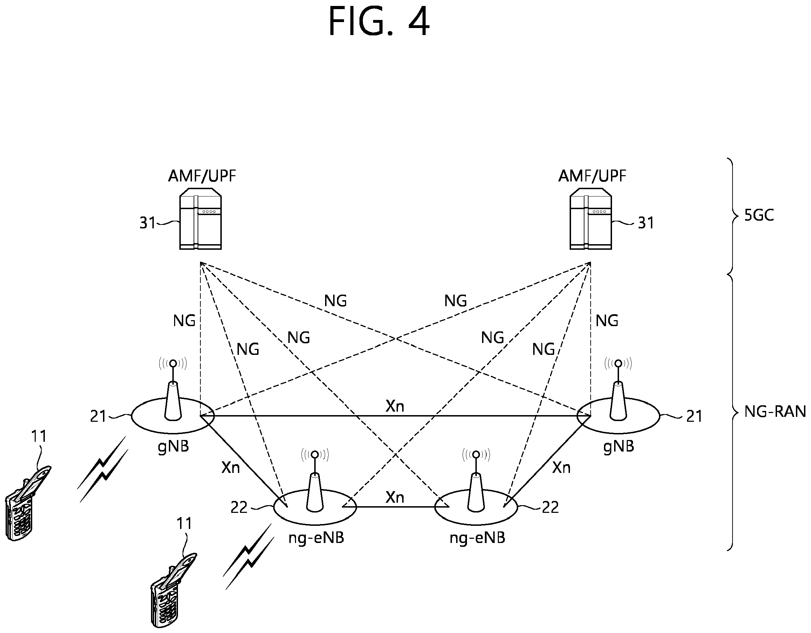

FIG. 4 shows another wireless communication system to which the present disclosure may be applied.

Specifically, FIG. 4 shows a system architecture based on a 5G new radio access technology (NR) system. An entity used in the 5G NR system (hereinafter, simply referred to as "NR") may absorb some or all functions of the entity (e.g., eNB, MME, S-GW) introduced in FIG. 1 (e.g., eNB, MME, S-GW). The entity used in the NR system may be identified in the name of "NG" to distinguish it from LTE.

Referring to FIG. 4, a wireless communication system includes one or more UEs 11, a next-generation RAN (NG-RAN), and a 5th generation core network (5GC). The NG-RAN consists of at least one NG-RAN node. The NG-RAN node is an entity corresponding to the BS 20 of FIG. 1. The NG-RAN node consists of at least one gNB 21 and/or at least one ng-eNB 22. The gNB 21 provides NR user plane and control plane protocol terminations towards the UE 11. The Ng-eNB 22 provides an E-UTRA user plane and a control plane protocol termination towards the UE 11.

The 5GC includes an access and mobility management function (AMF), a user plane function (UPF), and a session management function (SMF). The AMF hosts functions, such as non-access stratum (NAS) security, idle state mobility processing, and so on. The AMF is an entity including the conventional MMF function. The UPF hosts functions, such as mobility anchoring, protocol data unit (PDU) processing, and so on. The UPF is an entity including the conventional S-GW function. The SMF hosts functions, such as UE Internet Protocol (IP) address allocation, PDU session control, and so on.

The gNB and the ng-eNB are interconnected through an Xn interface. The gNB and the ng-eNB are also connected to the 5GC through an NG interface. More specifically, the gNB and the ng-eNB are connected to the AMF through an NG-C interface, and are connected to the UPF through an NG-U interface.

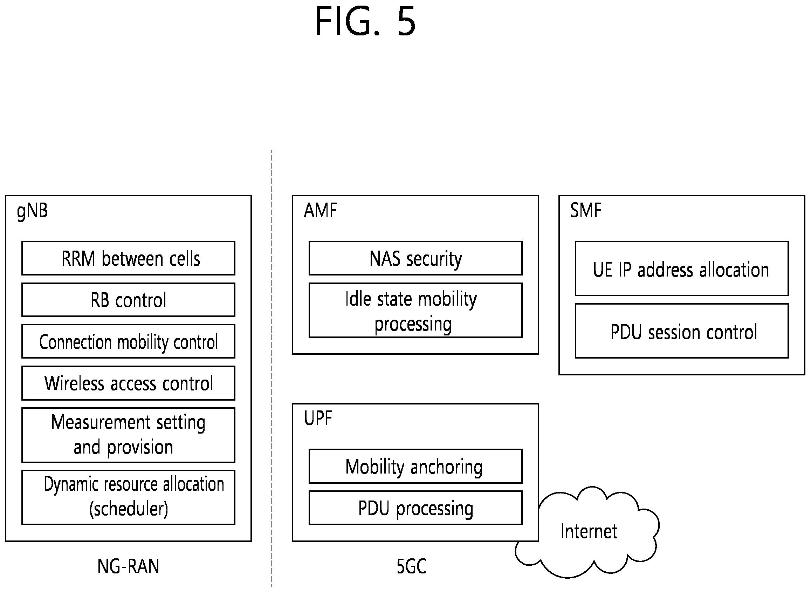

FIG. 5 illustrates a functional division between an NG-RAN and a 5GC.

Referring to FIG. 5, the gNB may provide functions such as an inter-cell radio resource management (Inter Cell RRM), radio bearer management (RB control), connection mobility control, radio admission control, measurement configuration & provision, dynamic resource allocation, and the like. The AMF may provide functions such as NAS security, idle state mobility handling, and so on. The UPF may provide functions such as mobility anchoring, PDU processing, and the like. The SMF may provide functions such as UE IP address assignment, PDU session control, and so on.

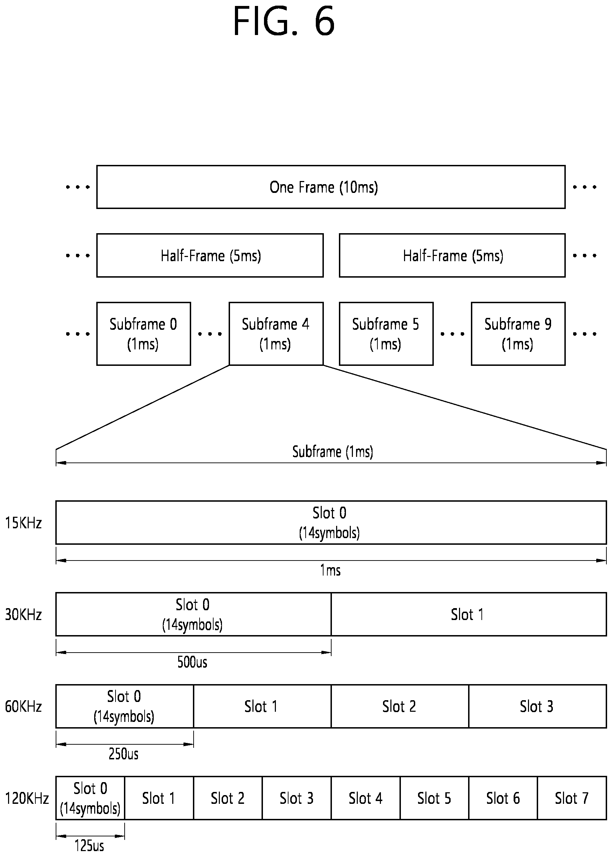

FIG. 6 illustrates an example of a frame structure that may be applied in NR.

Referring to FIG. 6, a frame may be composed of 10 milliseconds (ms) and include 10 subframes each composed of 1 ms.

In the NR, uplink and downlink transmissions may be configured on a frame basis. A radio frame has a length of 10ms, and may be defined as two 5ms half-frames (HFs). The HF may be defined as five 1ms sub-frames (SFs). The SF is divided into one or more slots, and the number of slots in the SF depends on a subcarrier spacing (SCS). Each slot includes 12 or 14 OFDM(A) symbols according to a cyclic prefix (CP). When a normal CP is used, each slot includes 14 symbols. When an extended CP is used, each slot includes 12 symbols. Herein, the symbol may include an OFDM symbol (or CP-OFDM symbol) and an SC-FDMA symbol (or DFT-S-OFDM symbol).

One or a plurality of slots may be included in a subframe according to subcarrier spacings.

The following table 1 illustrates a subcarrier spacing configuration $\mu$.

[Table 1]

| $\mu$ | $\Delta f = 2^{\mu} \cdot 15 [kHz]$ | Cyclic prefix |
|---|---|---|
| 0 | 15 | Normal |
| 1 | 30 | Normal |
| 2 | 60 | Normal Extended |
| 3 | 120 | Normal |
| 4 | 240 | Normal |

The following table 2 illustrates the number of slots in a frame ($N^{frame,\mu}_{slot}$), the number of slots in a subframe ($N^{subframe,\mu}_{slot}$), the number of symbols in a slot ($N^{slot}_{symb}$), and the like, according to subcarrier spacing configurations $\mu$.

[Table 2]

| $\mu$ | $N_{\mathrm{symb}}^{\mathrm{slot}}$ | $N_{\mathrm{slot}}^{\mathrm{frame}\mu}$ | $N_{\mathrm{slot}}^{\mathrm{subframe}\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 3 below illustrates that the number of symbols per slot, the number of slots per frame, and the number of slots per subframe vary depending on the SCS, in case of using an extended CP.

[Table 3]

| SCS($15*2^\mu$) | $N^{\mathrm{slot}}_{\mathrm{symb}}$ | $N^{\mathrm{frame,u}}_{\mathrm{slot}}$ | $N^{\mathrm{subframe,u}}_{\mathrm{slot}}$ |
|---|---|---|---|
| 60KHz ($\mu$ =2) | 12 | 40 | 4 |

NR supports multiple numbers (or subcarrier spacing (SCS)) to support various 5G services. For example, when the SCS is 15kHz, a wide region in the legacy cellular band is supported; and when the SCS is 30kHz/60kHz, dense urban areas, low time delay and wide carrier bandwidth are supported; and when the SCS is 60kHz or more, a bandwidth of more than 24.25GHz is supported in order to overcome phase noise.

The NR frequency band may be defined as two types of frequency ranges (FR1 and FR2). A numerical value of the frequency range may be changed and, for example, the two types of frequency ranges (FR1 and FR2) may be as shown in Table 4 below. For convenience of explanation, among the frequency ranges used in the NR system, FR1 may refer to "sub 6GHz range" and FR2 may refer to "above 6GHz range" and may be called millimeter wave (mmW).

[Table 4]

| Frequency Range designation | Corresponding frequency range | Subcarrier Spacing |
|---|---|---|
| FR1 | 450MHz-6000MHz | 15, 30, 60kHz |
| FR2 | 24250MHz-52600MHz | 60, 120, 240kHz |

As described above, the numerical value of the frequency range of the NR system may be changed. For example, FR1 may include a band of 410 MHz to 7125 MHz as shown in Table 5 below. That is, FR1 may include a frequency band of 6 GHz (or 5850, 5900, 5925 MHz, etc.) or higher. For example, the frequency band of 6GHz (or 5850, 5900, 5925 MHz, etc.) or higher included in FR1 may include an unlicensed band. The unlicensed band may be used for various purposes, for example, for communication for a vehicle (e.g., autonomous driving).

[Table 5]

| Frequency Range designation | Corresponding frequency range | Subcarrier Spacing |
|---|---|---|
| FR1 | 410MHz-7125MHz | 15, 30, 60kHz |
| FR2 | 24250MHz-52600MHz | 60, 120, 240kHz |

In an NR system, OFDM(A) numerologies (e.g., SCS, CP length, and so on) may be differently configured between a plurality of cells integrated to one UE. Accordingly, an (absolute time) duration of a time resource (e.g., SF, slot or TTI) (for convenience, collectively referred to as a time unit (TU)) configured of the same number of symbols may be differently configured between the integrated cells.

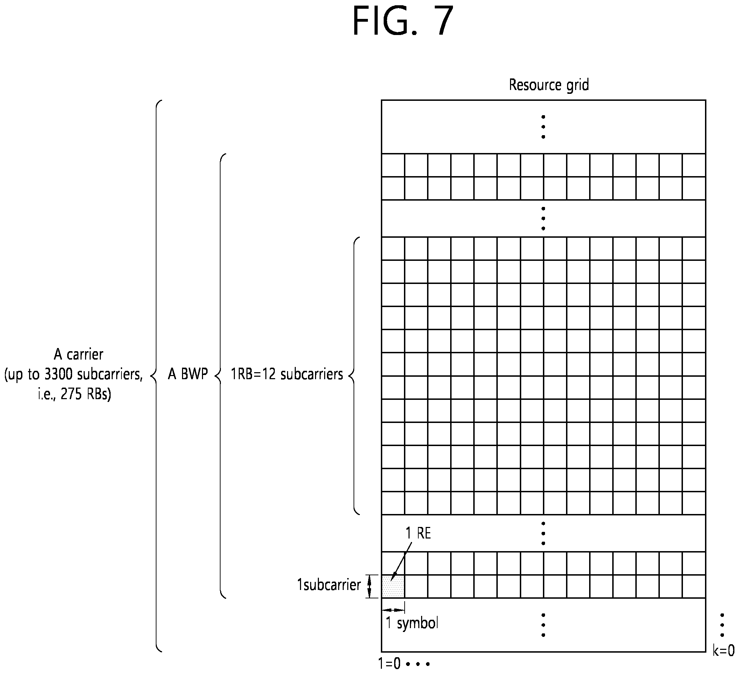

FIG. 7 illustrates a slot structure.

Referring to FIG. 7, a slot includes a plurality of symbols in a time domain. For example, in case of a normal CP, one slot may include 14 symbols. However, in case of an extended CP, one slot may include 12 symbols. Alternatively, in case of the normal CP, one slot may include 7 symbols. However, in case of the extended CP, one slot may include 6 symbols.

A carrier includes a plurality of subcarriers in a frequency domain. A resource block (RB) may be defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, and so on). The carrier may include up to N (e.g., 5) BWPs. Data communication may be performed through an activated BWP. Each element may be referred to as a resource element (RE) within a resource grid, and one complex symbol may be mapped thereto.

A physical downlink control channel (PDCCH) may include one or more control channel elements (CCEs) as illustrated in the following table 6.

[Table 6]

| Aggregation level | Number of CCEs |
|---|---|
| 1 | 1 |
| 2 | 2 |
| 4 | 4 |
| 8 | 8 |
| 16 | 16 |

That is, the PDCCH may be transmitted through a resource including 1, 2, 4, 8, or 16 CCEs. Here, the CCE includes six resource element groups (REGs), and one REG includes one resource block in a frequency domain and one orthogonal frequency division multiplexing (OFDM) symbol in a time domain.

A new unit called a control resource set (CORESET) may be introduced in the NR. The UE may receive a PDCCH in the CORESET.

Hereinafter, an integrated access and backhaul link (IAB) will be described. Meanwhile, hereinafter, for convenience of description, a proposed method will be described based on a new RAT (NR) system. However, the range of the system to which the proposed method is applied is expandable to other systems such as 3GPP LTE/LTE-A systems in addition to the NR system.

One potential technology aimed at enabling future cellular network deployment scenarios and applications is support for wireless backhaul and relay links. This enables flexible and highly dense deployment of NR cells without the need to proportionally densify the transport network.

It is expected that greater bandwidth in NR compared to LTE with the native deployment of massive MIMO or multi-beam systems will be available. Thus (e.g., mmWave spectrum) creates opportunities for the development and deployment of integrated access and backhaul links. This makes it easier for a deployment of a dense network of self-backhauled NR cells in a more integrated manner by establishing multiple control and data channels/procedures defined to provide access or access to the terminals. Such systems are referred to as integrated access and backhaul links (IAB).

The following terms may be used in the present disclosure.

- AC (x): an access link between the node (x) and the UE(s).
- BH (xy): a backhaul link between the node (x) and the node (y).

In this case, the node may mean a donor gNB (DgNB) or a relay node (RN). Here, the DgNB or the donor node may be a gNB that provides a function to support backhaul to IAB nodes.

In addition, in the present disclosure, for convenience of explanation, when relay node 1 and relay node 2 exist, relay node 1 which is connected to relay node 2 by a backhaul link and relaying data transmitted and received to relay node 2 is called a parent node of relay node 2, and relay node 2 is called a child node of relay node 1.

The following drawings were created to explain a specific example of the present specification. Since the names of specific devices described in the drawings or the names of specific signals/messages/fields are presented by way of example, the technical features of the present specification are not limited to the specific names used in the following drawings.

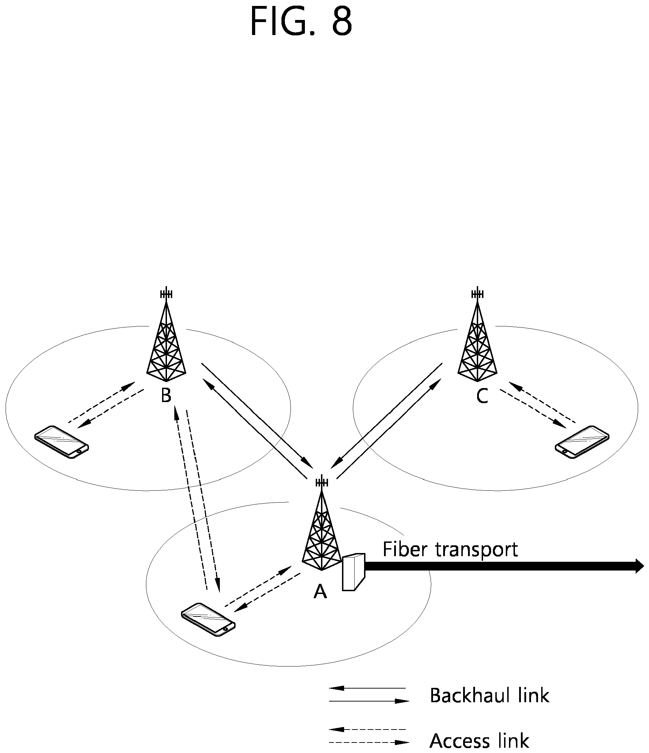

FIG. 8 schematically illustrates an example for a network with integrated access and backhaul links (IAB).

According to FIG. 8, relay nodes (rTRPs) may multiplex access and backhaul links in the time, frequency, or space domain (i.e., beam-based operation).

The operation of different links may operate on the same frequency or on different frequencies (which may also be referred to as 'in-band' or 'out-band' relays, respectively). Although efficient support of out-of-band relays is important for some NR deployment scenarios, it is very important to understand the requirements of in-band operation, which implies tight interworking with access links operating on the same frequency to accommodate duplex restrictions and avoid/mitigate interference.

Furthermore, operating an NR system in the millimeter wave spectrum have some unique challenges. It involves experiencing severe short-term blocking that cannot be easily mitigated by the current RRC-based handover mechanism due to the larger time scale required for completion of the procedure compared to short blocking. Overcoming short blocking in mmWave systems may require a fast RAN-based mechanism for switching between rTRPs that does not necessarily require the inclusion of a core network. The aforementioned need for mitigation of short blocking for NR operation in the millimeter wave spectrum, along with the need for easier deployment of self-backhauled NR cells, creates a need for the development of an integrated framework that allows for fast switching of access and backhaul links. Over-the-air (OTA) coordination between rTRPs may also be considered to mitigate interference and support end-to-end path selection and optimization.

The following requirements and aspects shall be addressed by the IAB for NR:

- Efficient and flexible operation for in-band and out-of-band relaying in indoor and outdoor scenarios
- Multi-hop and redundant connections
- End-to-end path selection and optimization
- Support of backhaul links with high spectral efficiency
- Support of legacy NR UEs

Legacy NR is designed to support half-duplex devices. As such, half-duplex may be supported and worthy of being targeted in an IAB scenario. Furthermore, IAB devices having a full duplex may also be considered.

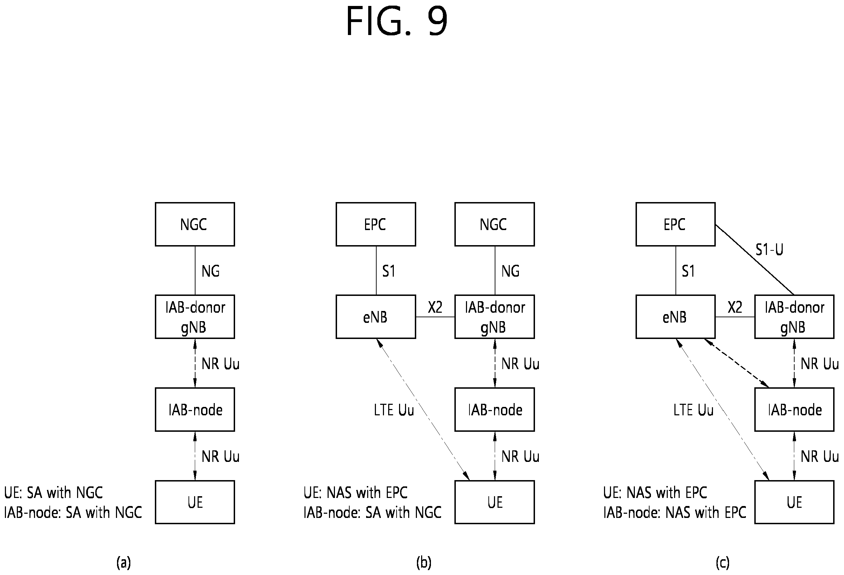

FIG. 9 shows an example of the operation of the IAB system in a standalone (SA) mode and a non-standalone (NSA) mode. Specifically, (a) of FIG. 9 shows an example of the operation of the UE and IAB node considering NGC in SA mode, (b) of FIG. 9 shows an example of the operation of the IAB node considering NGC in SA mode and the UE considering EPC in NSA mode, (c) of FIG. 9 shows an example of the operation of the UE and IAB node considering EPC in the NSA mode.

The IAB node may operate in SA mode or NSA mode. When operating in NSA mode, the IAB node uses only the NR link for backhauling. A UE connected to the IAB node may select an operation mode different from that of the IAB node. The UE may further connect to a different type of core network than the connected IAB node. In this case, (e) DECOR ((enhanced) dedicated core network) or slicing may be used for CN selection. An IAB node operating in NSA mode may be connected to the same or different eNB(s). UEs operating in the NSA mode may be connected to the same or different eNB from the IAB node to which they are connected. FIG. 9 shows an example in consideration of NGC in SA mode and an example in consideration of EPC in NSA mode.

In the IAB scenario, if each relay node (RN) does not have the scheduling capability, the donor gNB (DgNB) shall schedule the entire links between the DgNB, related relay nodes and UEs. In other words, the DgNB should make a scheduling decision for all links by collecting traffic information from all related relay nodes, and then inform each relay node of the scheduling information.

On the other hand, distributed scheduling can be performed when each relay node has a scheduling capability. Then, immediate scheduling of the uplink scheduling request of the UE is possible, and the backhaul/access link can be used more flexibly by reflecting the surrounding traffic conditions.

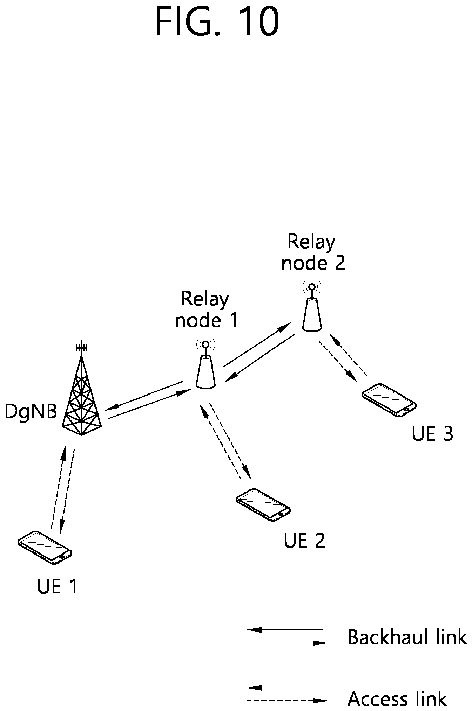

FIG. 10 schematically illustrates an example of a configuration of access and backhaul links.

FIG. 10 shows an example in which a backhaul link and an access link are configured when a DgNB and an IAB relay node (RN) are present. RN(b) and RN(e) are connecting the backhaul link, RN(c) is connecting the backhaul link to RN(b), and RN(d) is connecting the backhaul link to RN(c).

According to FIG. 10, the DgNB not only receives a scheduling request from the UE 1, but also receives scheduling requests from the UE 2 and UE 3. Then, the DgNB makes a scheduling decision of the two backhaul links and the three access links, and informs the scheduling results. Therefore, such centralized scheduling involves scheduling delays and causes latency problems.

On the other hand, distributed scheduling can be performed if each relay node has scheduling capability. Then, immediate scheduling for the uplink scheduling request of the UE can be performed, and the backhaul/access links can be used more flexibly by reflecting the surrounding traffic situation.

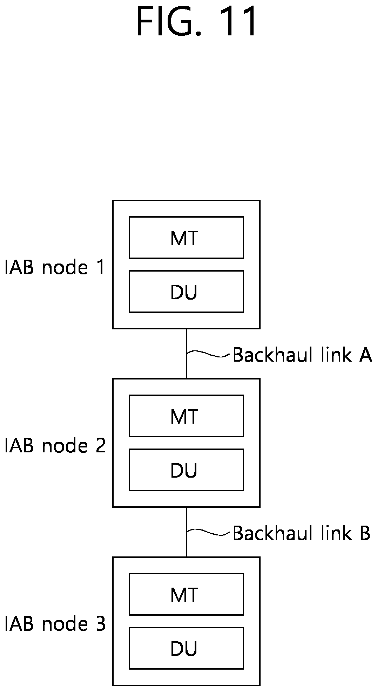

FIG. 11 explains links and relationships between IAB nodes.

Referring to FIG. 11, IAB node 1 is connected to IAB node 2 through a backhaul link A. For the backhaul link A, the IAB node 1 is the parent node of the IAB node 2, and the IAB node 2 is a child node of the IAB node 1. In addition, the IAB node 2 is connected to the IAB node 3 through a backhaul link B, and the IAB node 2 is a parent node of the IAB node 3 and the IAB node 3 is a child node of the IAB node 2 for the backhaul link B.

Here, each of the IAB nodes may perform two functions. One is Mobile Termination (MT), which maintains a wireless backhaul connection to an upper IAB node or donor node. And, the other is a DU (distributed unit), which provides access connection with UEs or connection with the MT of a lower IAB node.

For example, from the point of view of the IAB node 2, the DU of IAB node 2 is functionally connected to the MT of IAB node 3 on the backhaul link B, and at the same time, the MT of IAB node 2 is functionally connected to the DU of IAB node 1 on the backhaul link A. Here, the child link of the DU of IAB node 2 may mean the backhaul link B between the IAB node 2 and IAB node 3. Also, here, the parent link of the MT of the IAB node 2 may mean the backhaul link A between the IAB node 2 and the IAB node 1.

Meanwhile, from the perspective of the IAB node MT (or simply MT), the following time domain resources may be indicated for the parent link.

Downlink (DL) time resource
Uplink (UL) time resource
Flexible (F) time resource

From the point of view of the IAB node DU (or simply DU), a child link has the following time resource types.

Downlink (DL) time resource
Uplink (UL) time resource
Flexible (F) time resource
Not-available (NA) time resources (resources not used for communication on the DU child link)

Meanwhile, each of the downlink time resource, uplink time resource, and flexible time resource of the DU child link may belong to one of the following two categories.

Hard resource: this is always available time resource for DU child link

- Soft resource: this is a resource in which the availability of the time resource for the DU child link is explicitly or implicitly controlled by the parent node

From the perspective of the IAB node DU, there are four types of time resources: DL, UL, F, and NA for a child link. NA time resource refers to a resource not used for communication on a DU child link.

Each of the DL, UL, and F time resources of the DU child link may be a hard resource or a soft resource. The hard resource may mean resource(s) that are always available for communication on a DU child link. However, the soft resource may be resource(s) whose availability for communication on the DU child link is explicitly and/or implicitly controlled by the parent node.

In the present specification, the configuration for link direction and link availability of time resources for a DU child link may be referred to as DU configuration. The DU configuration can be used for effective multiplexing and interference handling between IAB nodes. For example, the DU configuration may be used to indicate which link is a valid link with respect to time resources between a parent link and a child link. In addition, only a subset of child nodes may be used for interference coordination between child nodes by configuring time resources to be used for DU operations. Considering this aspect, the DU configuration can be more effective when configured semi-statically.

Meanwhile, similar to slot format indication (SFI) configuration for an access link, an IAB node MT may have three types of time resources, DL, UL, and F, for its parent link.

Meanwhile, the foregoing is only an arbitrary classification, resource types from the viewpoint of the IAB node DU are the UL, the DL, and the F, and configurations for availability may be classified into the NA, the hard resource, and the soft resource, respectively. Specifically, the IAB node may receive resource configuration information, where the resource configuration information may include link direction information and availability information. Here, the link direction information may inform whether the type of a specific resource is the UL, the DL, or the F, and the availability information may inform whether a specific resource is the hard resource or the soft resource. Alternatively, the link direction information may inform whether the type of a specific resource is the UL, the DL, the F, or the NA, and the availability information may inform whether a specific resource is the hard resource or the soft resource.

Hereinafter, full duplex operation for NR will be described.

In 5G, new service types such as extended reality (XR), AI based service, and self-driving car are emerging. These services have characteristics in that traffic dynamically changes in both DL and UL directions and low latency is required for packet transmission. In 5G service, the traffic load will increase explosively to support these various new use cases.

On the other hand, the existing semi-static or dynamic TDD UL/DL configuration has limitations such as transmission time delay and interference between operators. Existing FDD schemes have limitations in terms of efficient frequency resource utilization for DL/UL directions.

Therefore, introduction of a full duplex operation in a single carrier is being discussed for low latency and efficient resource utilization in NR.

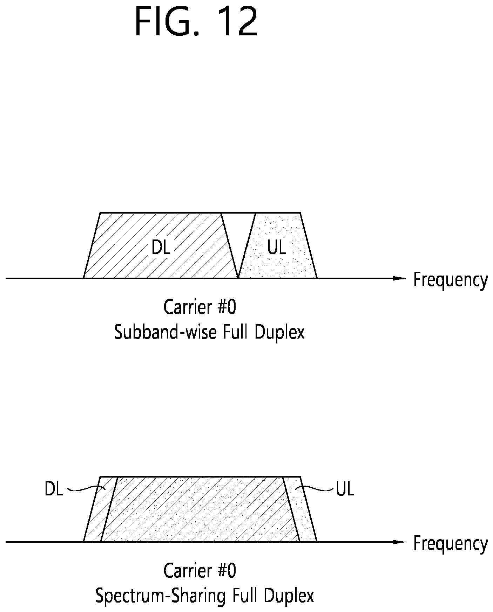

FIG. 12 schematically illustrates an example of SB-FD and SS-FD.

As examples of a method of applying full duplex in an intra-carrier, subband-wise full duplex (SB-FD) and spectrum-sharing full duplex (SS-FD) may be considered as shown in FIG. 12. In the case of SB-FD, transmission and reception of DL and UL are performed using different frequency resources in the same carrier. That is, DL and UL have different frequency resources for the same time resource. In the case of SS-FD, transmission and reception of DL and UL are performed through the same frequency resource or overlapped frequency resources in the same carrier. That is, DL and UL may have the same or overlapping frequency resources for the same time resource.

This full-duplex operation may be used in combination with a conventional half-duplex operation. In the conventional half-duplex-based TDD operation, only some time resources can be used for full-duplex operation. An SB-FD or SS-FD operation may be performed on a time resource for performing a full duplex operation.

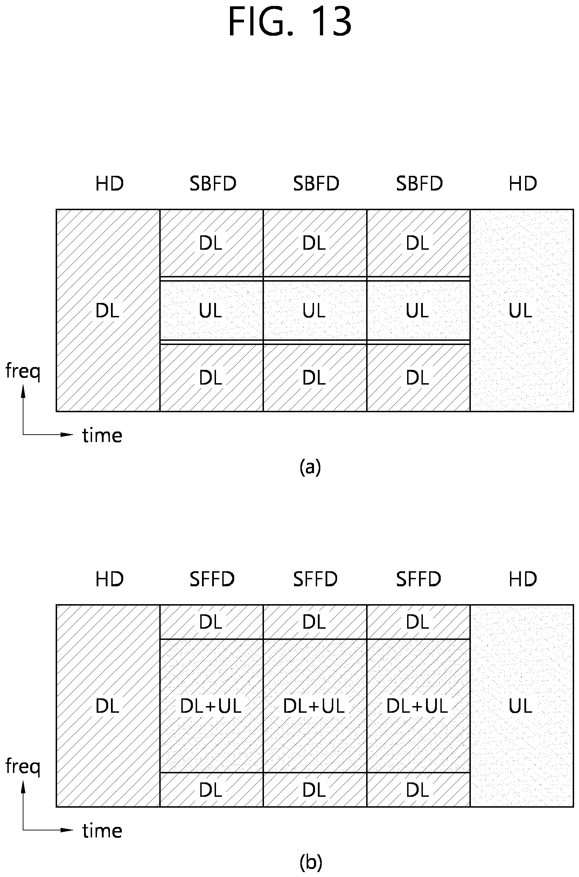

FIG. 13 schematically illustrates an example in which a time resource operating in half duplex (HD) and a time resource operating in full duplex (FD) such as SB-FD or SS-FD coexist.

In a sub-figure (a) of FIG. 13, some/partial time resources operate in SB-FD and the remaining time resources operate in HD. In a sub-figure (b) of FIG. 13, some/partial time resources operate in SS-FD and the remaining time resources operate in HD. In this case, the unit of time resource may be, for example, a slot or a symbol.

In time resources operating based on SB-FD, some/partial frequency resources are used as DL resources and some/partial frequency resources are used as UL resources. Between DL and UL frequency resources, there may be a guard sub-band (or guard frequency resource or guard subcarrier(s)) that is not used in both DL and UL and becomes empty. In time resources operating based on SF-FD, all frequency resources can be used for both DL and UL. Alternatively, some frequency resources at one end or both ends of the carrier may not be used for DL and/or (and/or) UL to reduce the effect of interference (i.e., adjacent carrier interference (ACI)) from other adjacent carriers. That is, one end or both ends of the carrier may be used as a guard band that is not used for both DL and UL. Alternatively, to reduce ACI affecting UL reception, one end or both ends of the carrier may be used only for DL transmission.

In the present specification, a frequency resource operating in DL among all frequency resources in time resources operating in FD is referred to as a DL sub-band, and a frequency resource operating in UL is also referred to as a UL sub-band.

In the case of the full duplex operation as described above, the full duplex operation can be performed from both the gNB point of view and the UE point of view. That is, both the gNB and the UE can simultaneously perform transmission and reception of DL and UL using the same or different frequency resources in the same time resource. On the other hand, only the gNB performs full-duplex operation, and the UE can perform half-duplex operation. The gNB may simultaneously transmit/receive DL and UL using the same or different frequency resources in the same time resource, but the UE performs only DL reception or UL transmission in a specific time resource. In this case, the gNB performs full duplex operation by performing DL transmission and UL reception with different UEs at the same time.

In the following, the proposal of the present disclosure will be described in more detail.

The following drawings are made to explain a specific example of the present specification. Since the names of specific devices or names of specific signals/messages/fields described in the drawings are provided as examples, the technical features of the present specification are not limited to the specific names used in the drawings below. In addition, the methods/configurations proposed in the present specification may be combined in various ways.

The present specification discusses power control according to a resource type in an IAB system. Considering the simultaneous operation of the IAB system and interference caused by the IAB system, discussion on power control of the IAB system is required. In parallel with this, a method of overriding a resource configured as U/F/D by cell-specific TDD configuration according to IAB-MT specific TDD configuration may be considered. Therefore, in the present specification, IAB-MT power control according to resource types set by two methods is proposed to reduce interference caused by the IAB system.

Meanwhile, in the present specification, override for a specific resource may mean that only one configuration among the plurality of different configurations is applied when a plurality of different configurations exist for the specific resource. For example, when the UE receives cell-specific configuration and UE-specific configuration for a specific resource, the UE may apply the UE-specific configuration rather than the cell-specific configuration to the specific resource. In this case, it may be expressed that the cell-specific configuration for the specific resource is overridden by the UE-specific configuration. As another example, when the UE receives cell-specific configuration and UE-specific configuration for a specific resource, the UE may apply the cell-specific configuration rather than UE-specific configuration to the specific resource. In this case, it may be expressed that the UE-specific configuration for the specific resource is overridden by the cell-specific configuration.

An IAB-MT is functionally the same as or similar to a terminal/UE, and an IAB-DU is identical to or similar to a base station/gNB. Therefore, the IAB-MT described below can be interpreted as (or replaced with) a terminal/UE, and the parent IAB node or IAB-DU can be interpreted as (or replaced with) a base station/gNB. In addition, a terminal/UE described below may be interpreted as an IAB-MT, and a base station/gNB may be replaced with a parent IAB node or an IAB-DU.

Hereinafter, uplink transmission power control of IAB-MT will be described.

The IAB-MT may have a plurality of power classes (or maximum transmission power/configured maximum output power) by regulation/configuration for the purpose of power control for uplink transmission. The plurality of power classes may have different values, and a power class of a gNB, a high power UE, a normal UE, and the like may be considered. Based on the power class, the maximum output power of the IAB-MT is considered in the order of P1, P2, and P3. For example, when having two power classes (gNB power class or high power UE power class and normal UE power class), the maximum output power set for the IAB-MT may consider the following.

P1 (transmission power 1): Maximum output power using a power class capable of transmitting with a relatively high transmission power among a plurality of power classes of the IAB-MT.
P2 (transmission power 2): Maximum output power using a power class capable of transmission with relatively low transmission power among a plurality of power classes of the IAB-MT.

The IAB-MT may set or limit P1 and P2 based on the maximum output power according to the method described below.

As an example, the terminal/UE may be allowed to set its own set maximum output power ($P_{CMAX,f,c}$) for a carrier f of serving cell c in each slot. The set maximum output power ($P_{CMAX,f,c}$) may be set within the following bounds.

[Equation 1]

$$P_{CMAX\_L,f,c} \leq P_{CMAX,f,c} \leq P_{CMAX\_H,f,c} \text{ with}$$

$$P_{CMAX\_L,f,c} = \text{MIN} \{P_{EMAX,c} - \Delta T_{C,c}, (P_{PowerClass} - \Delta P_{PowerClass}) - \text{MAX}(\text{MAX}(MPR_c + \Delta MPR_c, A\text{-}MPR_c) + \Delta T_{IB,c} + \Delta T_{C,c} + \Delta T_{RxSRS}, P\text{-}MPR_c) \}$$

$$P_{CMAX\_H,f,c} = \text{MIN} \{P_{EMAX,c}, P_{PowerClass} - \Delta P_{PowerClass} \}$$

Here, $P_{EMAX,c}$ may be a value given by one of the p-Max information element (IE) or the additionalPmax field of the NR-NS-PmaxList IE. Also, $P_{PowerClass}$ may be maximum terminal/UE power without considering tolerance. $P_{PowerClass}$ may be one of Table 7 below for the UE power class. The remaining parameters of the above equation may refer to parameters of the 3GPP NR system.

The following UE power classes define the maximum output power for all/entire transmission bandwidths within the channel bandwidth of an NR carrier unless otherwise specified. The measurement period may be at least one subframe (1 ms).

[Table 7]

| NRband | Class 1 (dBm) | Tolerance (dB) | Class 1.5 (dBm) | Tolerance (dB) | Class 2 (dBm) | Tolerance (dB) | Class 3 (dBm) | Tolerance (dB) |
|---|---|---|---|---|---|---|---|---|
| n1 | | | | | | | 23 | ±2 |
| n2 | | | | | | | 23 | ±2[3] |
| n3 | | | | | | | 23 | ±2[3] |
| n5 | | | | | | | 23 | ±2 |
| n7 | | | | | | | 23 | ±2[3] |
| n8 | | | | | | | 23 | ±2[3] |
| n12 | | | | | | | 23 | ±2[3] |
| n14 | 31 | +2/-3 | | | | | 23 | ±2[3] |

(continued)

| NRband | Class 1 (dBm) | Tolerance (dB) | Class 1.5 (dBm) | Tolerance (dB) | Class 2 (dBm) | Tolerance (dB) | Class 3 (dBm) | Tolerance (dB) |
|---|---|---|---|---|---|---|---|---|
| n18 | | | | | | | 23 | $\pm 2$ |
| n20 | | | | | | | 23 | $\pm 2^3$ |
| n25 | | | | | | | 23 | $\pm 2^3$ |
| n26 | | | | | | | 23 | $\pm 2^3$ |
| n28 | | | | | | | 23 | +2/-2.5 |
| n30 | | | | | | | 23 | $\pm 2$ |
| n34 | | | | | | | 23 | $\pm 2$ |
| n38 | | | | | | | 23 | $\pm 2$ |
| n39 | | | | | | | 23 | $\pm 2$ |
| n40 | | | | | 26 | +2/-3³ | 23 | $\pm 2$ |
| n41 | | | 29⁵ | +2/-3³ | 26 | +2/-3³ | 23 | $\pm 2^3$ |
| n47 | | | | | | | 23 | $\pm 2$ |
| n48 | | | | | | | 23 | +2/-3 |
| n50 | | | | | | | 23 | $\pm 2$ |
| n51 | | | | | | | 23 | $\pm 2$ |
| n53 | | | | | | | 23 | $\pm 2$ |
| n65 | | | | | | | 23 | $\pm 2$ |
| n66 | | | | | | | 23 | $\pm 2$ |
| n70 | | | | | | | 23 | $\pm 2$ |
| n71 | | | | | | | 23 | +2/-2.5 |
| n74 | | | | | | | 23 | $\pm 2$ |
| n77 | | | | | 26 | +2/-3 | 23 | +2/-3 |
| n78 | | | | | 26 | +2/-3 | 23 | +2/-3 |
| n79 | | | | | 26 | +2/-3 | 23 | +2/-3 |
| n80 | | | | | | | 23 | $\pm 2$ |
| n81 | | | | | | | 23 | $\pm 2$ |
| n82 | | | | | | | 23 | $\pm 2$ |
| n83 | | | | | | | 23 | $\pm 2$/-2.5 |
| n84 | | | | | | | 23 | $\pm 2$ |
| n86 | | | | | | | 23 | $\pm 2$ |
| n89 | | | | | | | 23 | $\pm 2$ |
| n91 | | | | | | | 23 | $\pm 2^{3, 4}$ |
| n92 | | | | | | | 23 | $\pm 2^{3, 4}$ |
| n93 | | | | | | | 23 | $\pm 2^{3, 4}$ |
| n94 | | | | | | | 23 | $\pm 2^{3, 4}$ |
| n95 | | | | | | | 23 | $\pm 2$ |

Hereinafter, uplink transmission power of an IAB-MT according to a resource type configured according to a cell-specific TDD configuration will be described.

The IAB-MT may configure transmit power considering the resource configuration of the UE according to the cell-specific TDD configuration. As a default operation, the IAB-MT may perform transmission using a transmission power equal to or less than that of the UE for a resource on which the UE performs uplink transmission, and the IAB-MT may perform transmission using a transmission power equal to or less than that of the gNB for a resource on which the UE performs downlink reception. This method can reduce inter operator interference and protect reception of the gNB/transmission of the UE. To this end, the IAB-MT may consider the following according to the cases described later.

If the terminal/UE is provided with tdd-UL-DL-ConfigurationCommon (hereinafter, it may simply be referred to as UL-DL-ConfigurationCommon), the terminal may configure a slot format per slot over multiple slots as indicated by tdd-UL-DL-ConfigurationCommon.

Here, the tdd-UL-DL-ConfigurationCommon may provide reference SCS configuration $\mu_{ref}$ and pattern1 by referenceSubcarrierSpacing parameter. Here, pattern1 may provide a slot configuration period P[msec] by dl-UL-TransmissionPeriodicity, $d_{slots}$, the number of slots with only downlink symbols by nrofDownlinkSlots, $d_{sym}$, the number of downlink symbols by nrofDownlinkSymbols, $u_{slots}$, the number of slots with only uplink symbols by nrofUplinkSlots, and $u_{sym}$, the number of uplink symbols by nrofUplinkSymbols.

(Case 1-1) Resource(s) configured for uplink by cell-specific TDD configuration (i.e., UL-DL-ConfigurationCommon).

Since other terminals/UEs other than the IAB-MT will also perform uplink transmission for the resource, the IAB-MT can transmit using transmit power equal to or smaller than the power class of the terminal to protect it. Alternatively, transmission may be performed using the smallest value among the maximum output powers of the IAB-MT regardless of the transmit power of the terminal. Alternatively, uplink transmission may not be performed on a resource configured as uplink cell-specifically in order not to cause interference.

For the resource, when override by IAB-MT-specific TDD configuration (i.e., tdd-UL-DL-ConfigurationDedicated-IAB-MT) is allowed and the resource is set to downlink, since the IAB-MT performs a downlink reception operation, transmission power may not be set.

(Case 1-2) Resource(s) configured for downlink by cell-specific TDD configuration (i.e., UL-DL-ConfigurationCommon).

Since the IAB-MT is performing downlink reception for the resource, transmission power may not be set.

However, when the resource is set to uplink as override by IAB-MT specific TDD configuration (i.e., tdd-UL-DL-ConfigurationDedicated-IAB-MT) is allowed later for the resource, the terminal may transmit using the largest value among the transmission power equal to or less than the maximum output power of the gNB/base station or the maximum output power of the IAB-MT.

(Case 1-3) Resource(s) configured as flexible by cell-specific TDD configuration (i.e., UL-DL-ConfigurationCommon).

Since the IAB-MT does not know that the resource is configured for uplink or downlink for the resource, the terminal/UE determines that the resource is configured for uplink by cell-specific TDD configuration and allocates transmission power according to Case 1-1. That is, the IAB-MT can transmit using transmit power equal to or smaller than the power class of the UE. Or, as another method, the UE may allocate transmit power to the corresponding resource on the assumption that the UE is set to downlink. That is, the terminal/UE can transmit using the largest value among the transmission power equal to or less than the maximum output power of the gNB or the maximum output power of the IAB-MT.

Alternatively, among the resources set to be flexible, considering the TDD configuration, for a certain ratio of resources (i.e., for transmission that precedes in time) close to resources set for downlink or a certain number of resources defined in advance, transmission may be performed using the largest value among transmission power equal to or less than the maximum output power of the gNB or maximum output power of the IAB-MT, and for the remaining resources, transmission may be performed using transmission power equal to or smaller than the power class of the UE. Alternatively, for a certain percentage of resources that are following in time, that is, close to the resources set for uplink, or for a certain number of resources defined in advance, transmission may be performed using transmission power equal to or less than the power class of the UE, and for the remaining resources, transmission may be performed using the largest value among transmission power equal to or less than the maximum output power of the gNB or maximum output power of the IAB-MT.

Alternatively, when the IAB-MT performs uplink transmission on a resource configured as flexible, information related to what maximum output power is assumed for transmission may be set from the network. That is, the network may set information related to the maximum output power or power class for the flexible resource.

Alternatively, the IAB-MT may set the maximum output power for the flexible resource as a default to a value predefined or set from one of the above-mentioned methods, and the maximum output power for the flexible resource from the IAB-DU / gNB / network may be set. The IAB-MT may be instructed with the application timing and holding time of the maximum output power for the configured flexible resource. Alternatively, the IAB-MT may be instructed only at the application time, and the application of the maximum output power may expire after a predetermined specific time. Alternatively, both the application time and the holding time may be applied as values agreed upon in advance.

For a resource later used for uplink by IAB-MT specific TDD configuration (i.e., tdd-UL-DL-ConfigurationDedicated-IAB-MT) and/or slot format information (SFI) based on DCI format 2_0 among the resources, the IAB-MT may transmit using transmit power equal to or smaller than the power class of the terminal/UE. Similarly, for a resource later used for downlink by IAB-MT specific TDD configuration (i.e., tdd-UL-DL-ConfigurationDedicated-IAB-MT) and/or SFI based on DCI format 2_0 among the resources, since the IAB-MT performs downlink reception, transmit power may not be allocated. since the IAB-MT performs downlink reception, the IAB-MT may not allocate transmit power.

The main purpose of the IAB-MT performing uplink power control by allocating transmit power/maximum output power/power class of the IAB-MT in a resource-specific manner is to control inter-cell interference of the network by using transmission power suitable for the resource direction (uplink, downlink). As described above, when the resource direction is changed, the parent IAB-DU or gNB that transmits and receives the corresponding IAB-MT also needs to set transmit power according to the resource direction. Otherwise, representatively, when the uplink is configured as a cell-specific configuration, but is overridden and configured as the downlink, the IAB-DU can use all of the downlink transmission power of the gNB/IAB-DU, and this is because strong interference may occur in reception of other uplinks since it is a resource used for uplink throughout the cell. That is, the transmit power of the parent IAB-DU transmitted to and received from the IAB-MT in the above-mentioned method needs to be adjusted.

(Case 2-1) The IAB-DU/gNB can consider the following for resources configured as uplink by UL-DL-ConfigurationCommon among the resources of the child IAB node (child IAB-MT) that transmits and receives the IAB-DU/gNB.

For example, the IAB-DU may not perform downlink transmission as in the existing operation. Alternatively, contrary to the existing operation, the IAB-DU may perform downlink transmission in the power class of the UE or the IAB-MT to protect other uplink signals since the corresponding resource may be overridden in downlink.

In another example, for the above resource, if the resource of the child IAB node (child IAB-MT) is allowed to be overridden by the IAB-MT specific TDD configuration (e.g. tdd-UL-DL-ConfigurationDedicated-IAB-MT) and configured as downlink, the IAB-DU may perform downlink transmission in the power class of gNB/IAB-DU. Alternatively, since the resource is a cell-specific uplink resource, uplink transmission of another IAB-MT/UE can be performed on the resource, so to minimize interference, the IAB-DU may perform downlink transmission in the UE/IAB-MT power class only to the corresponding child IAB node.

(Case 2-2) The IAB-DU/gNB can consider the following for resources configured as downlink by UL-DL-ConfigurationCommon among the resources of the child IAB node (child IAB-MT) that transmits and receives the IAB-DU/gNB.

As an example, the IAB-DU may perform downlink transmission with downlink transmission power as in the conventional operation. Alternatively, since the corresponding resource can be overridden in uplink, that is, in consideration of IAB-MT-specific overriding in uplink, the IAB-DU may perform downlink transmission in the power class of the UE or the IAB-MT.

As another example, when the resource of the child IAB node of the resource is set to uplink by allowing override by the IAB-MT specific TDD configuration (tdd-UL-DL-ConfigurationDedicated-IAB-MT), the IAB-DU may not perform downlink transmission to the child IAB node or may perform downlink transmission in the power class of UE/IAB-MT. Alternatively, for the resource at a specific time such as a corresponding slot, if one or more of all child IAB nodes or more than a predetermined number or more than a certain ratio of child IAB nodes is overridden by uplink, the IAB-DU may perform downlink transmission in the corresponding time resource to all its child IAB nodes in the power class of UE/IAB-MT.

Hereinafter, a method of changing the resource configured in cell-specific TDD configuration according to IAB-MT specific TDD configuration will be described.

The above method assumes that the following proposed scheme related to TDD configuration of IAB-MT is introduced. In the current NR system, resource directions set to downlink or uplink with cell-specific TDD configuration other than a flexible resource cannot be overridden in other directions by IAB-MT-specific TDD configuration. In the case of IAB-MT, it may be considered to introduce such an operation for efficient simultaneous operation with IAB-DU. Therefore, the method described below for the TDD configuration method of the IAB-MT is proposed.

For example, even if the transmission direction (downlink, uplink, flexible) for resources is explicitly set by cell-specific TDD configuration, resources set in a specific transmission direction can be overridden in other transmission directions (downlink, uplink, flexible) by IAB-MT specific TDD configuration. In this case, the override method may give priority to preventing the IAB-MT from transmitting with the same or similar transmission power as that of the gNB for a period in which another terminal/UE performs an uplink operation. For example, resources configured for downlink by cell-specific TDD configuration (i.e., UL-DL-ConfigurationCommon) may be later overridden in uplink by IAB-MT specific TDD configuration (i.e., tdd-UL-DL-ConfigurationDedicated-IAB-MT). On the other hand, resources configured for uplink by cell-specific TDD configuration cannot be overridden in another resource direction by IAB-MT-specific TDD configuration. Alternatively, resources configured for uplink by cell-specific TDD configuration may be overridden only in a flexible.

Since the resource configured as uplink by the cell-specific TDD configuration are resource used by other terminals/UEs for uplink, if the IAB-MT transmits in this resource with a higher transmit power than a normal UE, such as the power class of the gNB, interference may occur when the gNB receives the uplink signal of the UE. Therefore, the IAB-MT can perform resource override according to the resource change method configured in the cell-specific TDD configuration according to the IAB-MT specific TDD configuration, and the IAB-MT can allocate transmit power according to a method for suggesting uplink transmit power of the IAB-MT according to the resource type set according to the cell-specific TDD configuration, so that the uplink operation of the terminal can be protected by adjusting the transmission power similarly to that of the terminal for the period in which the terminal performs the uplink operation or the period in which the probability of performing the uplink operation is high.

Hereinafter, maximum output power configuration according to the time resource will be described.

Maximum output power information applied to each time resource domain of the IAB-MT may be set. Specifically, the following methods may be used.

For example, the network may set a time resource region to which P2 (or P1) is applied as maximum output power to the IAB-MT. In this case, the IAB-MT may determine uplink transmission power by determining P2 (or P1) as the maximum output power in the corresponding time resource and determining P1 (or P2) as the maximum output power in the remaining time resource.

As another example, when an uplink resource are configured by TDD configuration, maximum output power applied to the uplink resource may be configured together. For example, when the uplink resource is configured in a specific slot using IAB-MT specific TDD configuration (i.e., tdd-UL-DL-ConfigurationDedicated-IAB-MT), maximum output power applied for transmission in the uplink resource of the corresponding slot may be set together.

Specifically, the maximum output power may be indicated/informed using a method such as directly indicating/informing the maximum output power value or indicating/informing power class information. When a method of configuring maximum output power according to the time resource is applied, the IAB-MT may apply the maximum output power value according to the maximum output power mentioned in a method for suggesting uplink transmission power of an IAB-MT according to a resource type configured according to the cell-specific TDD configuration and a method of changing resources configured in cell-specific TDD configuration according to the IAB-MT specific TDD configuration as a default value. That is, the IAB-MT expects the maximum output power to be set according to the time resource, but if the maximum output power is not set, the IAB-MT may apply the maximum output power according to the TDD configuration.

The IAB-MT may use the aforementioned maximum output power information to determine transmit power to be applied so as not to exceed the maximum output power when performing uplink transmission in the corresponding uplink resource.

Hereinafter, maximum output power configuration in uplink scheduling will be described.

When the IAB-DU/network schedules/configures transmission of an uplink signal/channel to the IAB-MT, it may set information on maximum output power applied to transmission of the corresponding uplink signal/channel. That is, scheduling/configuration of uplink signals/channels and maximum output power for the uplink signals/channels may be explicitly/implicitly set simultaneously. When scheduling/configuration and maximum output power are configured for the IAT-MT, the IAB-MT may apply the maximum output power value according to the maximum output power mentioned in a method for suggesting uplink transmission power of an IAB-MT according to a resource type configured according to the cell-specific TDD configuration and a method of changing resources configured in cell-specific TDD configuration according to the IAB-MT specific TDD configuration as a default value. That is, the IAB-MT expects the maximum output power to be set according to the scheduling/configuration, but if the maximum output power is not set, the IAB-MT may apply the maximum output power according to the TDD configuration.

Hereinafter, uplink transmission power control of the terminal/UE will be described.

The above-described methods may consider the following network conditions depending on whether the gNB or the UE operates in full duplex mode. In the following description, the gNB may be replaced by the parent IAB-DU and the UE may be replaced by the IAB-MT. In addition, the parent IAB node or parent IAB-DU in the above method may be replaced by the gNB, and the IAB-MT or IAB node may be replaced by the UE.

(Case 3-1) Full duplex UE and half duplex gNB

When the UE is in a full duplex situation, the full duplex operation of the UE may consider two things. First, it may be considered to perform a full duplex operation in a time resource explicitly indicated in a specific direction (i.e., uplink, downlink, flexible or new slot format for supporting a full duplex UE, etc.) by a cell-specific resource. In this case, the full duplex UE may expect to set the maximum output power according to the time resource of the maximum output power according to the above-mentioned time resource. That is, with respect to the time resource for simultaneous transmission/reception of a full-duplex UE and the time resource transmitted by the UE in a half-duplex operation, the UE may be expected to be set to different maximum output powers.

Second, since the cell-specific resource is cell common information, a method in which the gNB indicates the resource direction to an uplink, a downlink, or a flexible time resource as in the conventional method, and then overrides this with a UE-specific resource to indicate a time resource in which the full duplex UE can transmit/receive at the same time may be considered. In this case, the UE may receive the maximum output power set according to the resource type in a method similar to the Case 1-1, Case 1-2, and Case 1-3 described above.

(Case 3-2) Half-duplex UE and full-duplex gNB

Two cases may be considered for full duplex of gNB. Specifically, the case of a gNB performing a full duplex operation in all operating bands and the case of performing a full duplex operation in some bands or an uplink band and a downlink band adjacent to each other may be considered. That is, SBFD and SFFD mentioned in FIG. 13 may be considered. In SBFD and SFFD, two of the methods for informing/indicating the UE of the period in which the gNB performs full duplex operation may be considered. First, a method of indicating a time interval in which a gNB performs a full duplex operation as a flexible resource in cell-specific resource configuration and indicating a flexible resource for each UE as uplink or downlink may be considered. Second, a method of indicating all of the time intervals for performing full duplex operation in uplink or downlink in cell-specific resource configuration and then overriding them in a different direction in UE-specific resource configuration can be considered.

For example, when the time unit of the time axis in a sub-figure (a) of FIG. 13 is a slot, a method in which the gNB may configure DDDDU (downlink-downlink-downlink-downlink-uplink) based on cell-specific configurations for a total of five slots, and the gNB may override the 2nd, 3rd, and 4th slot formats to uplink based on UE-specific resource configuration in order to indicate uplink transmission to some UEs in the cell in the time interval corresponding to the SBFD, that is, the 2nd, 3rd, and 4th slots may be considered.

Or, conversely, in a sub-figure (a) of FIG. 13, a method in which the gNB may configure DUUUU (downlink-uplink-uplink-uplink-uplink) based on cell-specific configurations for a total of five slots, and the gNB may override the 2nd, 3rd, and 4th slot formats to downlink based on UE-specific resource configuration in order to indicate some UEs in the cell to receive downlink in the time interval corresponding to SBFD, that is, in the 2nd, 3rd, and 4th slots may be considered.

Through methods such as the above two cases, as in the first slot of FIG. 13(a), the UE may identify the time resource in which the gNB performs downlink (DL) transmission in half duplex (HD), the time resource for the gNB to perform SBFD (or SFFD), such as the 2nd, 3rd, and 4th slots, and the time resource for gNB to perform uplink (UL) reception in half duplex. For convenience, if these are respectively resource type 0 (gNB HD-DL), resource type 1 (gNB SFFD / SBFD), and resource type 2 (gNB HD-UL), the UE may consider being allocated different maximum output powers for resource type 1 and resource type 2. For example, the gNB may set the maximum output power of the UE to be smaller than that of resource type 2 in the time resource of resource type 1 for the purpose of suppressing UE-to-UE interference. Through this, reception interference can be suppressed from the perspective of a UE performing downlink reception in resource type 1. As another example, the gNB may set the maximum output power of the UE to be greater than resource type 2 in the time resource of resource type 1 for the decoding performance of the receiving end of the gNB due to self-interference cancellation performance, etc. At this time, the gNB may indicate the difference in maximum output power according to the resource type, that is, the difference between the maximum output power in resource type 1 and resource type 2 to the UE by prior appointment or agreement, or the gNB may indicate the difference through radio resource control (RRC)/medium access control-control element (MAC-CE)/DCI.

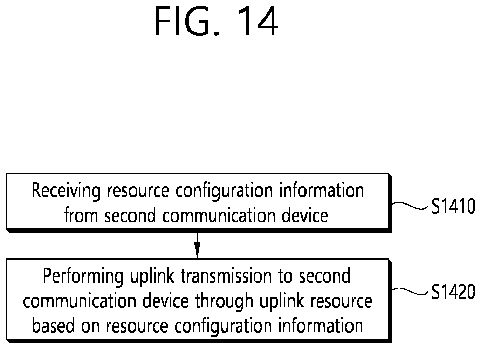

FIG. 14 is a flowchart of an example of an uplink transmission method of a first communication device according to some implementations of the present specification.

Referring to FIG. 14, the first communication device receives resource configuration information from the second communication device (S1410). Here, the resource configuration information may inform/indicate a location of a downlink resource, a flexible resource, and an uplink resource, and maximum output power allocated to the uplink resource.

The first communication device performs uplink transmission to the second communication device through the uplink resource based on the resource configuration information (S1420). Here, transmit power of the uplink transmission may be less than or equal to the maximum output power.

For example, the resource configuration information may include information on the resource direction (uplink, downlink, flexible) of the time resource in the first slot and information on the first maximum output power configured/allocated for the uplink resource in the first slot. In addition, the resource configuration information may include information on the resource direction (uplink, downlink, flexible) of the time resource in the second slot and information on the first maximum output power configured/allocated for the uplink resource in the second slot. In this case, the first communication device may perform uplink transmission for the second communication device based on the first maximum output power through uplink resource in the first slot. In addition, the first communication device may perform uplink transmission for the second communication device based on the second maximum output power through uplink resource in the second slot. In this case, the value of the first maximum output power and the value of the second maximum output power may be different from each other. Accordingly, power control according to the time resource is possible. Meanwhile, in the above example, the case where the time resource unit is a slot has been described, but it is obvious that the method of FIG. 14 can be extended and applied to various time resource units.

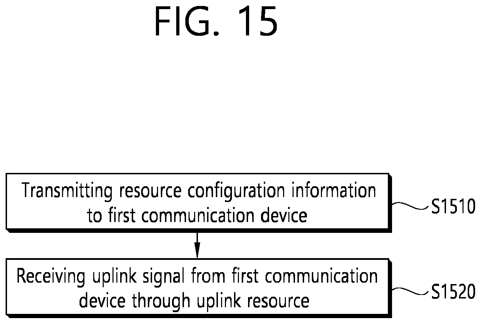

FIG. 15 is a flowchart of an example of a method of receiving an uplink signal by a second communication device according to some implementations of the present specification.

Referring to FIG. 15, the second communication device transmits resource configuration information to the first communication device (S1510). Here, the resource configuration information may inform/indicate a location of a downlink resource, a flexible resource, and an uplink resource, and maximum output power allocated to the uplink resource.

The second communication device receives the uplink signal from the first communication device through the uplink resource (S1520). Here, transmit power of the uplink signal may be less than or equal to the maximum output power.

The methods proposed in the present specification may be performed by at least one computer readable medium (CRM) including instructions based on being executed by at least one processor and an apparatus/device configured for controlling the UE/IAB node and for including at least one memory storing instructions and at least processor coupling the at least one memory in addition to the terminal/IAB node, wherein the CRM, wherein the at least one processor is configured for performing the methods proposed herein. In addition, according to the methods proposed in the present specification, it is obvious that an operation by a base station/parent IAB node corresponding to an operation performed by a terminal/IAB node can be considered.

Hereinafter, an example of a communication system to which the present disclosure is applied will be described.

Although not limited to this, various descriptions, functions, procedures, proposals, methods, and/or operation flowcharts of the present disclosure disclosed in this document may be applied to various fields requiring wireless communication/connection (e.g., 5G) between devices.

Hereinafter, it will be exemplified in more detail with reference to the drawings. In the following drawings/descriptions, the same reference numerals may represent the same or corresponding hardware blocks, software blocks, or functional blocks, unless otherwise indicated.

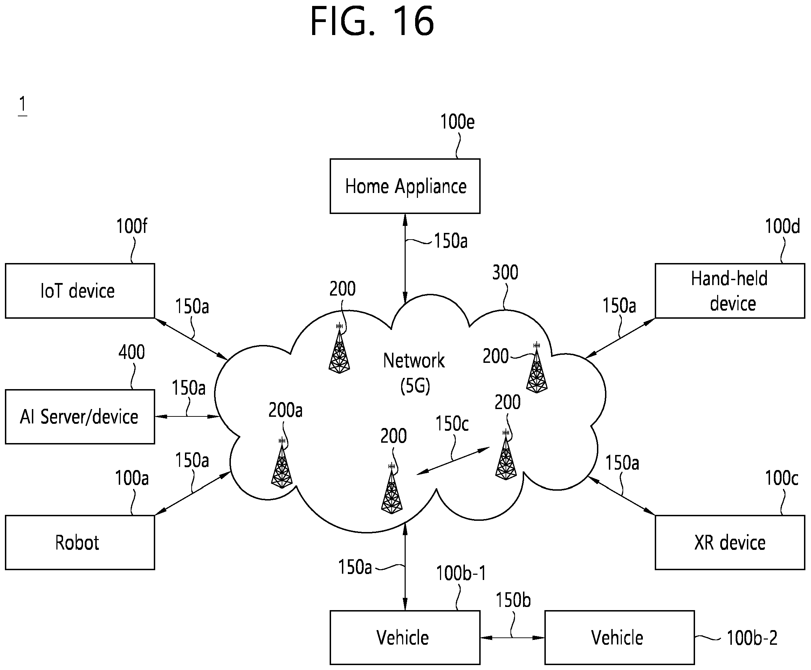

FIG. 16 shows a communication system (1), in accordance with an embodiment of the present disclosure.

Referring to FIG. 16, a communication system (1) to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot (100a), vehicles (100b-1, 100b-2), an extended Reality (XR) device (100c), a hand-held device (100d), a home appliance (100e), an Internet of Things (IoT) device (100f), and an Artificial Intelligence (AI) device/server (400). For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, and so on. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device (200a) may operate as a BS/network node with respect to other wireless devices.

Here, the wireless communication technology implemented in the wireless device of the present specification may include a narrowband Internet of Things for low-power communication as well as LTE, NR, and 6G. In this case, for example, the NB-IoT technology may be an example of a Low Power Wide Area Network (LPWAN) technology. In addition, it may be implemented in standards such as LTE Cat NB1 and/or LTE Cat NB2, and is not limited to the above-described name. Additionally or alternatively, the wireless communication technology implemented in the wireless device of the present specification may perform communication based on LTE-M technology. In this case, as an example, the LTE-M technology may be an example of an LPWAN technology, and may be called by various names such as enhanced machine type communication (eMTC). For example, LTE-M technology may be implemented in at least one of various standards such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described name. Additionally or alternatively, the wireless communication technology implemented in the wireless device of the present specification may include at least one of ZigBee, Bluetooth, and Low Power Wide Area Network (LPWAN) in consideration of low-power communication, and is not limited to the above-described name. For example, the ZigBee technology can create PAN (personal area networks) related to small/low-power digital communication based on various standards such as IEEE 802.15.4, and can be called by various names.

The wireless devices (100a~100f) may be connected to the network (300) via the BSs (200). An AI technology may be applied to the wireless devices (100a~100f) and the wireless devices (100a~100f) may be connected to the AI server (400) via the network (300). The network (300) may be configured using a 3G network, a 4G (e.g., LTE) network, or a 5G (e.g., NR) network. Although the wireless devices (100a~100f) may communicate with each other through the BSs (200)/network (300), the wireless devices (100a~100f) may perform direct communication (e.g., sidelink communication) with each other without passing through the BSs/network. For example, the vehicles (100b-1, 100b-2) may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices (100a~100f).

Wireless communication/connections (150a, 150b, 150c) may be established between the wireless devices (100a~100f)/BS (200), or BS (200)/BS (200). Herein, the wireless communication/connections may be established through various RATs (e.g., 5G NR) such as uplink/downlink communication (150a), sidelink communication (150b) (or, D2D communication), or inter BS communication (e.g. relay, Integrated Access Backhaul (IAB)). The wireless devices and the BSs/the wireless devices may transmit/receive radio signals to/from each other through the wireless communication/connections (150a, 150b). For example, the wireless communication/connections (150a, 150b) may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

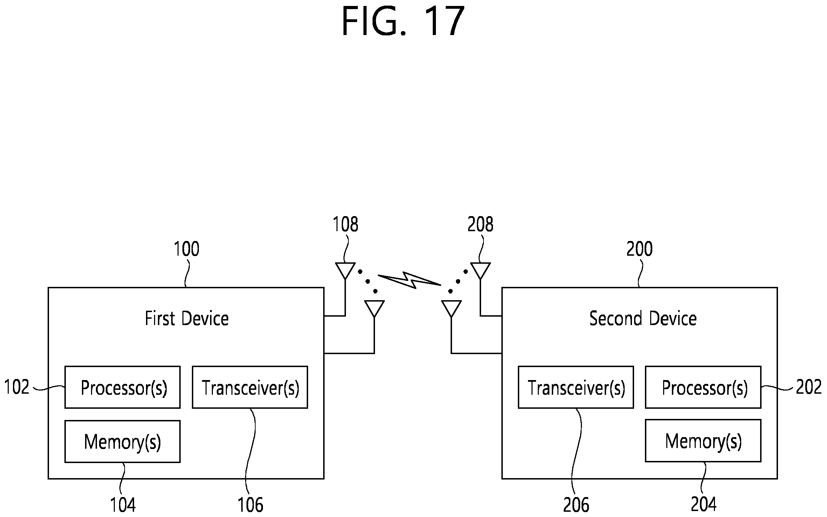

FIG. 17 shows wireless devices, in accordance with an embodiment of the present disclosure.

Referring to FIG. 17, a first wireless device (100) and a second wireless device (200) may transmit radio signals through a variety of RATs (e.g., LTE and NR). Herein, {the first wireless device (100) and the second wireless device (200)} may correspond to {the wireless device (100x), the BS (200)} and/or {the wireless device (100x), the wireless device (100x)} of FIG. 16.

The first wireless device (100) may include one or more processors (102) and one or more memories (104) and additionally further include one or more transceivers (106) and/or one or more antennas (108). The processor(s) (102) may control the memory(s) (104) and/or the transceiver(s) (106) and may be configured to implement the descriptions, functions, procedures, proposals, methods, and/or operational flowcharts disclosed in this document. For example, the processor(s) (102) may process information within the memory(s) (104) to generate first information/signals and then transmit radio signals including the first information/signals through the transceiver(s) (106). The processor(s) (102) may receive radio signals including second information/signals through the transceiver (106) and then store information obtained by processing the second information/signals in the memory(s) (104). The memory(s) (104) may be connected to the processor(s) (102) and may store a variety of information related to operations of the processor(s) (102). For example, the memory(s) (104) may store software code including commands for performing a part or the entirety of processes controlled by the processor(s) (102) or for performing the descriptions, functions, procedures, proposals, methods, and/or operational flowcharts disclosed in this document. Herein, the processor(s) (102) and the memory(s) (104) may be a part of a communication modem/circuit/chip designed to implement RAT (e.g., LTE or NR). The transceiver(s) (106) may be connected to the processor(s) (102) and transmit and/or receive radio signals through one or more antennas (108). Each of the transceiver(s) (106) may include a transmitter and/or a receiver. The transceiver(s) (106) may be interchangeably used with Radio Frequency (RF) unit(s). In the present disclosure, the wireless device may represent a communication modem/circuit/chip.

The second wireless device (200) may include one or more processors (202) and one or more memories (204) and additionally further include one or more transceivers (206) and/or one or more antennas (208). The processor(s) (202) may control the memory(s) (204) and/or the transceiver(s) (206) and may be configured to implement the descriptions, functions, procedures, proposals, methods, and/or operational flowcharts disclosed in this document. For example, the processor(s) (202) may process information within the memory(s) (204) to generate third information/signals and then transmit radio signals including the third information/signals through the transceiver(s) (206). The processor(s) (202) may receive radio signals including fourth information/signals through the transceiver(s) (106) and then store information obtained by processing the fourth information/signals in the memory(s) (204). The memory(s) (204) may be connected to the processor(s) (202) and may store a variety of information related to operations of the processor(s) (202). For example, the memory(s) (204) may store software code including commands for performing a part or the entirety of processes controlled by the processor(s) (202) or for performing the descriptions, functions, procedures, proposals, methods, and/or operational flowcharts disclosed in this document. Herein, the processor(s) (202) and the memory(s) (204) may be a part of a communication modem/circuit/chip designed to implement RAT (e.g., LTE or NR). The transceiver(s) (206) may be connected to the processor(s) (202) and transmit and/or receive radio signals through one or more antennas (208). Each of the transceiver(s) (206) may include a transmitter and/or a receiver. The transceiver(s) (206) may be interchangeably used with RF unit(s). In the present disclosure, the wireless device may represent a communication modem/circuit/chip.

Hereinafter, hardware elements of the wireless devices (100, 200) will be described more specifically. One or more protocol layers may be implemented by, without being limited to, one or more processors (102, 202). For example, the one or more processors (102, 202) may implement one or more layers (e.g., functional layers such as PHY, MAC, RLC, PDCP, RRC, and SDAP). The one or more processors (102, 202) may generate one or more Protocol Data Units (PDUs) and/or one or more Service Data Unit (SDUs) according to the descriptions, functions, procedures, proposals, methods, and/or operational flowcharts disclosed in this document. The one or more processors (102, 202) may generate messages, control information, data, or information according to the descriptions, functions, procedures, proposals, methods, and/or operational flowcharts disclosed in this document. The one or more processors (102, 202) may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers (106, 206). The one or more processors (102, 202) may receive the signals (e.g., baseband signals) from the one or more transceivers (106, 206) and obtain the PDUs, SDUs, messages, control information, data, or information according to the descriptions, functions, procedures, proposals, methods, and/or operational flowcharts disclosed in this document.

The one or more processors (102, 202) may be referred to as controllers, microcontrollers, microprocessors, or microcomputers. The one or more processors (102, 202) may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors (102, 202). The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors (102, 202) or stored in the one or more memories (104, 204) so as to be driven by the one or more processors (102, 202). The descriptions, functions, procedures, proposals, methods, and/or operational flowcharts disclosed in this document may be implemented using firmware or software in the form of code, commands, and/or a set of commands.

The one or more memories (104, 204) may be connected to the one or more processors (102, 202) and store various types of data, signals, messages, information, programs, code, instructions, and/or commands. The one or more memories (104, 204) may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories (104, 204) may be located at the interior and/or exterior of the one or more processors (102, 202). The one or more memories (104, 204) may be connected to the one or more processors (102, 202) through various technologies such as wired or wireless connection.

The one or more transceivers (106, 206) may transmit user data, control information, and/or radio signals/channels, mentioned in the methods and/or operational flowcharts of this document, to one or more other devices. The one or more transceivers (106, 206) may receive user data, control information, and/or radio signals/channels, mentioned in the descriptions, functions, procedures, proposals, methods, and/or operational flowcharts disclosed in this document, from one or more other devices. For example, the one or more transceivers (106, 206) may be connected to the one or more processors (102, 202) and transmit and receive radio signals. For example, the one or more processors (102, 202) may perform control so that the one or more transceivers (106, 206) may transmit user data, control information, or radio signals to one or more other devices. The one or more processors (102, 202) may perform control so that the one or more transceivers (106, 206) may receive user data, control information, or radio signals from one or more other devices. The one or more transceivers (106, 206) may be connected to the one or more antennas (108, 208) and the one or more transceivers (106, 206) may be configured to transmit and receive user data, control information, and/or radio signals/channels, mentioned in the descriptions, functions, procedures, proposals, methods, and/or operational flowcharts disclosed in this document, through the one or more antennas (108, 208). In this document, the one or more antennas may be a plurality of physical antennas or a plurality of logical antennas (e.g., antenna ports). The one or more transceivers (106, 206) may convert received radio signals/channels, and so on, from RF band signals into baseband signals in order to process received user data, control information, radio signals/channels, and so on, using the one or more processors (102, 202). The one or more transceivers (106, 206) may convert the user data, control information, radio signals/channels, and so on, processed using the one or more processors (102, 202) from the base band signals into the RF band signals. To this end, the one or more transceivers (106, 206) may include (analog) oscillators and/or filters.

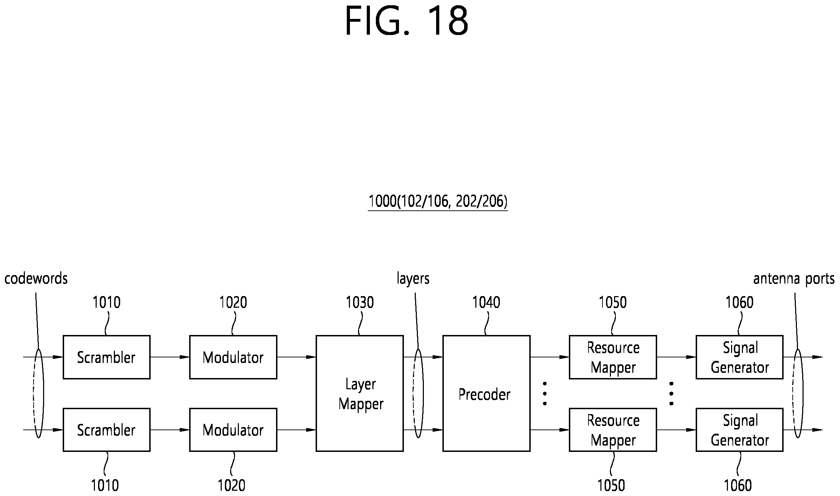

FIG. 18 shows a signal process circuit for a transmission signal, in accordance with an embodiment of the present disclosure.

Referring to FIG. 18, a signal processing circuit (1000) may include scramblers (1010), modulators (1020), a layer mapper (1030), a precoder (1040), resource mappers (1050), and signal generators (1060). An operation/function of FIG. 18 may be performed, without being limited to, the processors (102, 202) and/or the transceivers (106, 206) of FIG. 17. Hardware elements of FIG. 18 may be implemented by the processors (102, 202) and/or the transceivers (106, 206) of FIG. 17. For example, blocks 1010~1060 may be implemented by the processors (102, 202) of FIG. 17. Alternatively, the blocks 1010~1050 may be implemented by the processors (102, 202) of FIG. 17 and the block 1060 may be implemented by the transceivers (106, 206) of FIG. 17.

Codewords may be converted into radio signals via the signal processing circuit (1000) of FIG. 18. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers (1010). Scramble sequences used for scrambling may be generated based on an initialization value, and the initialization value may include ID information of a wireless device. The scrambled bit sequences may be modulated to modulation symbol sequences by the modulators (1020). A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper (1030). Modulation symbols of each transport layer may be mapped (pre-coded) to corresponding antenna port(s) by the precoder (1040). Outputs z of the precoder (1040) may be obtained by multiplying outputs y of the layer mapper (1030) by an N*M precoding matrix W. Herein, N is the number of antenna ports and M is the number of transport layers. The precoder (1040) may perform precoding after performing transform precoding (e.g., DFT) for complex modulation symbols. Alternatively, the precoder (1040) may perform precoding without performing transform precoding.

The resource mappers (1050) may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators (1060) may generate radio signals from the mapped modulation symbols and the generated radio signals may be transmitted to other devices through each antenna. For this purpose, the signal generators (1060) may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures (1010~1060) of FIG. 18. For example, the wireless devices (e.g., 100, 200 of FIG. 17) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

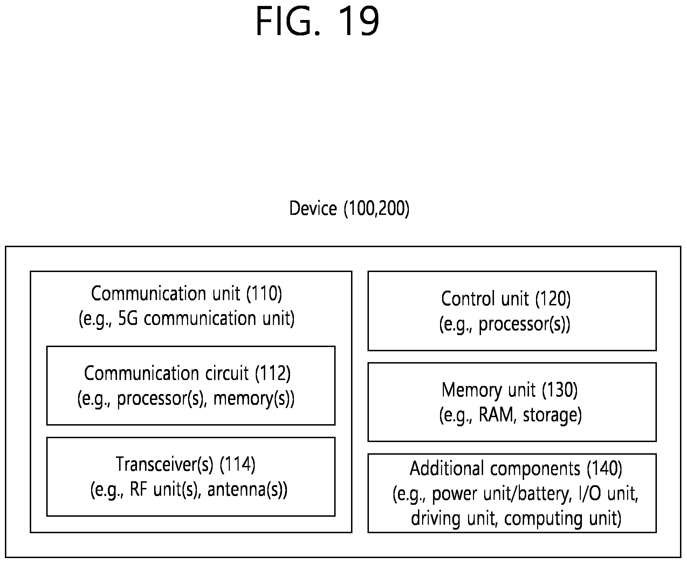

FIG. 19 shows another example of a wireless device, in accordance with an embodiment of the present disclosure. The wireless device may be implemented in various forms according to a use-case/service (refer to FIG. 16).

Referring to FIG. 19, wireless devices (100, 200) may correspond to the wireless devices (100, 200) of FIG. 17 and may be configured by various elements, components, units/portions, and/or modules. For example, each of the wireless devices (100, 200) may include a communication unit (110), a control unit (120), a memory unit (130), and additional components (140). The communication unit may include a communication circuit (112) and transceiver(s) (114). For example, the communication circuit (112) may include the one or more processors (102, 202) and/or the one or more memories (104, 204) of FIG. 17. For example, the transceiver(s) (114) may include the one or more transceivers (106, 206) and/or the one or more antennas (108, 208) of FIG. 17. The control unit (120) is electrically connected to the communication unit (110), the memory (130), and the additional components (140) and controls overall operation of the wireless devices. For example, the control unit (120) may control an electric/mechanical operation of the wireless device based on programs/code/commands/information stored in the memory unit (130). The control unit (120) may transmit the information stored in the memory unit (130) to the exterior (e.g., other communication devices) via the communication unit (110) through a wireless/wired interface or store, in the memory unit (130), information received through the wireless/wired interface from the exterior (e.g., other communication devices) via the communication unit (110).

The additional components (140) may be variously configured according to types of wireless devices. For example, the additional components (140) may include at least one of a power unit/battery, input/output (I/O) unit, a driving unit, and a computing unit. The wireless device may be implemented in the form of, without being limited to, the robot (100a of FIG. 16), the vehicles (100b-1, 100b-2 of FIG. 16), the XR device (100c of FIG. 16), the hand-held device (100d of FIG. 16), the home appliance (100e of FIG. 16), the IoT device (100f of FIG. 16), a digital broadcast terminal, a hologram device, a public safety device, an MTC device, a medicine device, a fintech device (or a finance device), a security device, a climate/environment device, the AI server/device (400 of FIG. 16), the BSs (200 of FIG. 16), a network node, and so on. The wireless device may be used in a mobile or fixed place according to a use-example/service.

In FIG. 19, the entirety of the various elements, components, units/portions, and/or modules in the wireless devices (100, 200) may be connected to each other through a wired interface or at least a part thereof may be wirelessly connected through the communication unit (110). For example, in each of the wireless devices (100, 200), the control unit (120) and the communication unit (110) may be connected by wire and the control unit (120) and first units (e.g., 130, 140) may be wirelessly connected through the communication unit (110). Each element, component, unit/portion, and/or module within the wireless devices (100, 200) may further include one or more elements. For example, the control unit (120) may be configured by a set of one or more processors. As an example, the control unit (120) may be configured by a set of a communication control processor, an application processor, an Electronic Control Unit (ECU), a graphical processing unit, and a memory control processor. As another example, the memory (130) may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 19 will be described in detail with reference to the drawings.

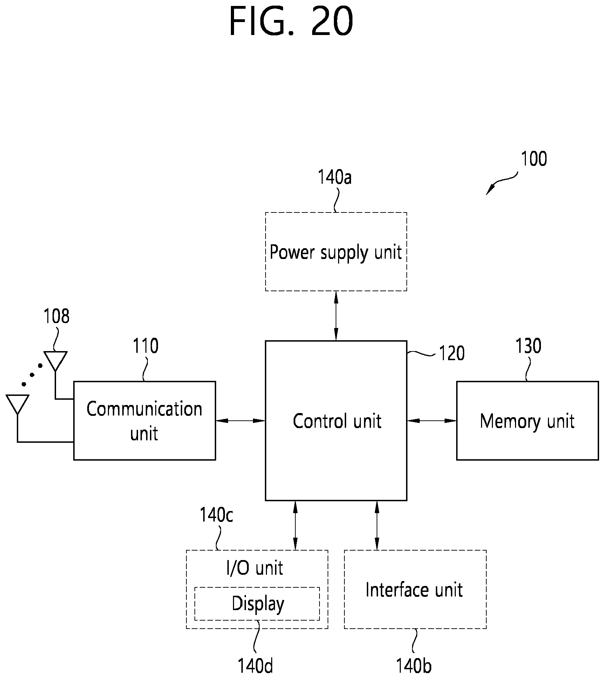

FIG. 20 shows a hand-held device, in accordance with an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT).

Referring to FIG. 20, a hand-held device (100) may include an antenna unit (108), a communication unit (110), a control unit (120), a memory unit (130), a power supply unit (140a), an interface unit (140b), and an I/O unit (140c). The antenna unit (108) may be configured as a part of the communication unit (110). Blocks 110~130/140a~140c correspond to the blocks 110~130/140 of FIG. 19, respectively.

The communication unit (110) may transmit and receive signals (e.g., data and control signals) to and from other wireless devices or BSs. The control unit (120) may perform various operations by controlling constituent elements of the hand-held device (100). The control unit (120) may include an Application Processor (AP). The memory unit (130) may store data/parameters/programs/code/commands needed to drive the hand-held device (100). The memory unit (130) may store input/output data/information. The power supply unit (140a) may supply power to the hand-held device (100) and include a wired/wireless charging circuit, a battery, and so on. The interface unit (140b) may support connection of the hand-held device (100) to other external devices. The interface unit (140b) may include various ports (e.g., an audio I/O port and a video I/O port) for connection with external devices. The I/O unit (140c) may input or output video information/signals, audio information/signals, data, and/or information input by a user. The I/O unit (140c) may include a camera, a microphone, a user input unit, a display unit (140d), a speaker, and/or a haptic module.

As an example, in the case of data communication, the I/O unit (140c) may obtain information/signals (e.g., touch, text, voice, images, or video) input by a user and the obtained information/signals may be stored in the memory unit (130). The communication unit (110) may convert the information/signals stored in the memory into radio signals and transmit the converted radio signals to other wireless devices directly or to a BS. The communication unit (110) may receive radio signals from other wireless devices or the BS and then restore the received radio signals into original information/signals. The restored information/signals may be stored in the memory unit (130) and may be output as various types (e.g., text, voice, images, video, or haptic) through the I/O unit (140c).

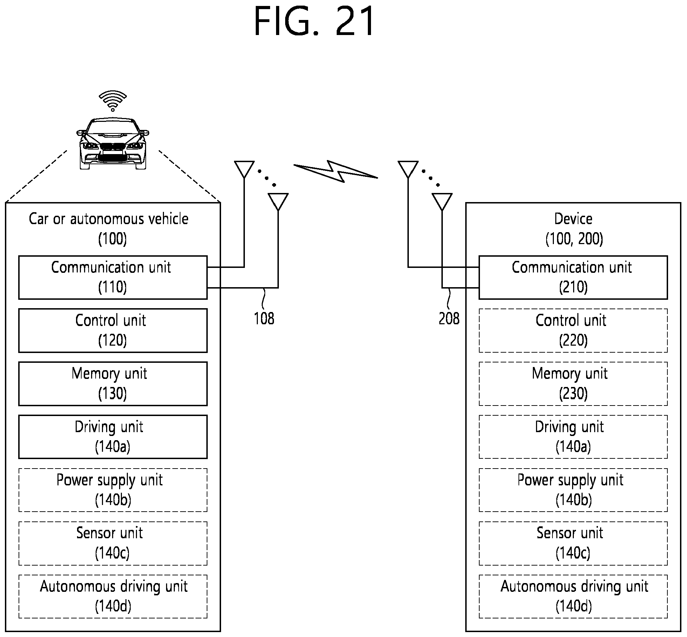

FIG. 21 shows a vehicle or an autonomous vehicle, in accordance with an embodiment of the present disclosure. The vehicle or autonomous vehicle may be implemented by a mobile robot, a car, a train, a manned/unmanned Aerial Vehicle (AV), a ship, and so on.

Referring to FIG. 21, a vehicle or autonomous vehicle (100) may include an antenna unit (108), a communication unit (110), a control unit (120), a driving unit (140a), a power supply unit (140b), a sensor unit (140c), and an autonomous driving unit (140d). The antenna unit (108) may be configured as a part of the communication unit (110). The blocks 110/130/140a~140d correspond to the blocks 110/130/140 of FIG. 19, respectively.

The communication unit (110) may transmit and receive signals (e.g., data and control signals) to and from external devices such as other vehicles, BSs (e.g., gNBs and road side units), and servers. The control unit (120) may perform various operations by controlling elements of the vehicle or the autonomous vehicle (100). The control unit (120) may include an Electronic Control Unit (ECU). The driving unit (140a) may cause the vehicle or the autonomous vehicle (100) to drive on a road. The driving unit (140a) may include an engine, a motor, a powertrain, a wheel, a brake, a steering device, and so on. The power supply unit (140b) may supply power to the vehicle or the autonomous vehicle (100) and include a wired/wireless charging circuit, a battery, and so on. The sensor unit (140c) may obtain a vehicle state, ambient environment information, user information, and so on. The sensor unit (140c) may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit (140d) may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit (110) may receive map data, traffic information data, and so on, from an external server. The autonomous driving unit (140d) may generate an autonomous driving path and a driving plan from the obtained data. The control unit (120) may control the driving unit (140a) such that the vehicle or the autonomous vehicle (100) may move along the autonomous driving path according to the driving plan (e.g., speed/direction control). In the middle of autonomous driving, the communication unit (110) may aperiodically/periodically obtain recent traffic information data from the external server and obtain surrounding traffic information data from neighboring vehicles. In the middle of autonomous driving, the sensor unit (140c) may obtain a vehicle state and/or surrounding environment information. The autonomous driving unit (140d) may update the autonomous driving path and the driving plan based on the newly obtained data/information. The communication unit (110) may transfer information on a vehicle position, the autonomous driving path, and/or the driving plan to the external server. The external server may predict traffic information data using AI technology, and so on, based on the information collected from vehicles or autonomous vehicles and provide the predicted traffic information data to the vehicles or the autonomous vehicles.

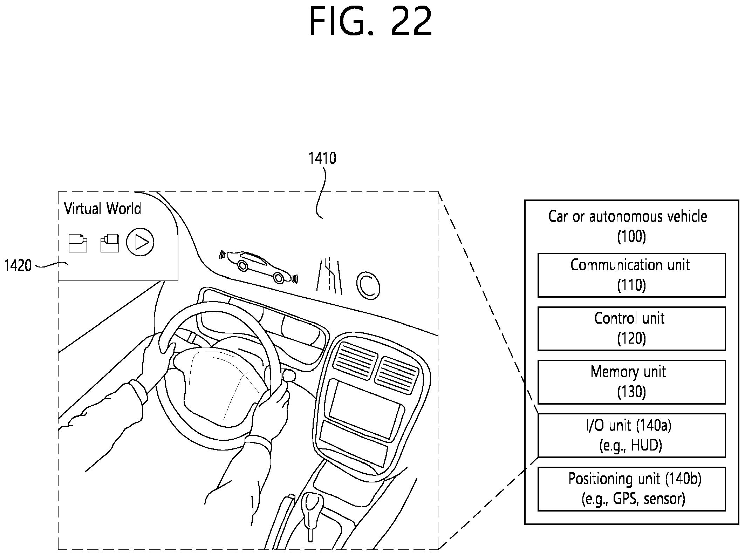

FIG. 22 shows a vehicle, in accordance with an embodiment of the present disclosure. The vehicle may be implemented as a transport means, an aerial vehicle, a ship, and so on.

Referring to FIG. 22, a vehicle (100) may include a communication unit (110), a control unit (120), a memory unit (130), an I/O unit (140a), and a positioning unit (140b). Herein, the blocks 110~130/140a~140b correspond to blocks 110~130/140 of FIG. 19.

The communication unit (110) may transmit and receive signals (e.g., data and control signals) to and from external devices such as other vehicles or BSs. The control unit (120) may perform various operations by controlling constituent elements of the vehicle (100). The memory unit (130) may store data/parameters/programs/code/commands for supporting various functions of the vehicle (100). The I/O unit (140a) may output an AR/VR object based on information within the memory unit (130). The I/O unit (140a) may include an HUD. The positioning unit (140b) may obtain information on the position of the vehicle (100). The position information may include information on an absolute position of the vehicle (100), information on the position of the vehicle (100) within a traveling lane, acceleration information, and information on the position of the vehicle (100) from a neighboring vehicle. The positioning unit (140b) may include a GPS and various sensors.

As an example, the communication unit (110) of the vehicle (100) may receive map information and traffic information from an external server and store the received information in the memory unit (130). The positioning unit (140b) may obtain the vehicle position information through the GPS and various sensors and store the obtained information in the memory unit (130). The control unit (120) may generate a virtual object based on the map information, traffic information, and vehicle position information and the I/O unit (140a) may display the generated virtual object in a window in the vehicle (1410, 1420). The control unit (120) may determine whether the vehicle (100) normally drives within a traveling lane, based on the vehicle position information. If the vehicle (100) abnormally exits from the traveling lane, the control unit (120) may display a warning on the window in the vehicle through the I/O unit (140a). In addition, the control unit (120) may broadcast a warning message regarding driving abnormity to neighboring vehicles through the communication unit (110). According to situation, the control unit (120) may transmit the vehicle position information and the information on driving/vehicle abnormality to related organizations.

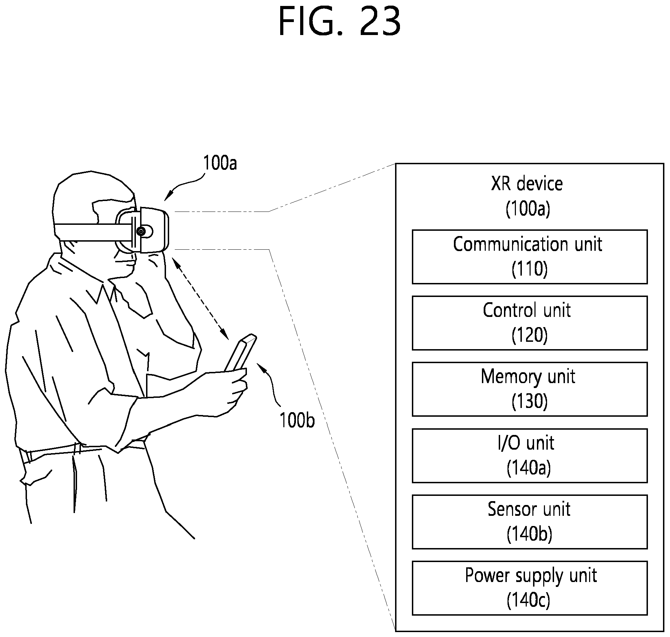

FIG. 23 shows an XR device, in accordance with an embodiment of the present disclosure. The XR device may be implemented by an HMD, an HUD mounted in a vehicle, a television, a smartphone, a computer, a wearable device, a home appliance, a digital signage, a vehicle, a robot, and so on.

Referring to FIG. 23, an XR device (100a) may include a communication unit (110), a control unit (120), a memory unit (130), an I/O unit (140a), a sensor unit (140b), and a power supply unit (140c). Herein, the blocks 110~130/140a~140c correspond to the blocks 110~130/140 of FIG. 31, respectively.

The communication unit (110) may transmit and receive signals (e.g., media data and control signals) to and from external devices such as other wireless devices, hand-held devices, or media servers. The media data may include video, images, and sound. The control unit (120) may perform various operations by controlling constituent elements of the XR device (100a). For example, the control unit (120) may be configured to control and/or perform procedures such as video/image acquisition, (video/image) encoding, and metadata generation and processing. The memory unit (130) may store data/parameters/programs/code/commands needed to drive the XR device (100a)/generate XR object. The I/O unit (140a) may obtain control information and data from the exterior and output the generated XR object. The I/O unit (140a) may include a camera, a microphone, a user input unit, a display unit, a speaker, and/or a haptic module. The sensor unit (140b) may obtain an XR device state, surrounding environment information, user information, and so on. The sensor unit (140b) may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone and/or a radar. The power supply unit (140c) may supply power to the XR device (100a) and include a wired/wireless charging circuit, a battery, and so on.

For example, the memory unit (130) of the XR device (100a) may include information (e.g., data) needed to generate the XR object (e.g., an AR/VR/MR object). The I/O unit (140a) may receive a command for manipulating the XR device (100a) from a user and the control unit (120) may drive the XR device (100a) according to a driving command of a user. For example, when a user desires to watch a film or news through the XR device (100a), the control unit (120) transmits content request information to another device (e.g., a hand-held device 100b) or a media server through the communication unit (130). The communication unit (130) may download/stream content such as films or news from another device (e.g., the hand-held device 100b) or the media server to the memory unit (130). The control unit (120) may control and/or perform procedures such as video/image acquisition, (video/image) encoding, and metadata generation/processing with respect to the content and generate/output the XR object based on information on a surrounding space or a real object obtained through the I/O unit (140a)/sensor unit (140b).

The XR device (100a) may be wirelessly connected to the hand-held device (100b) through the communication unit (110) and the operation of the XR device (100a) may be controlled by the hand-held device (100b). For example, the hand-held device (100b) may operate as a controller of the XR device (100a). To this end, the XR device (100a) may obtain information on a 3D position of the hand-held device (100b) and generate and output an XR object corresponding to the hand-held device (100b).

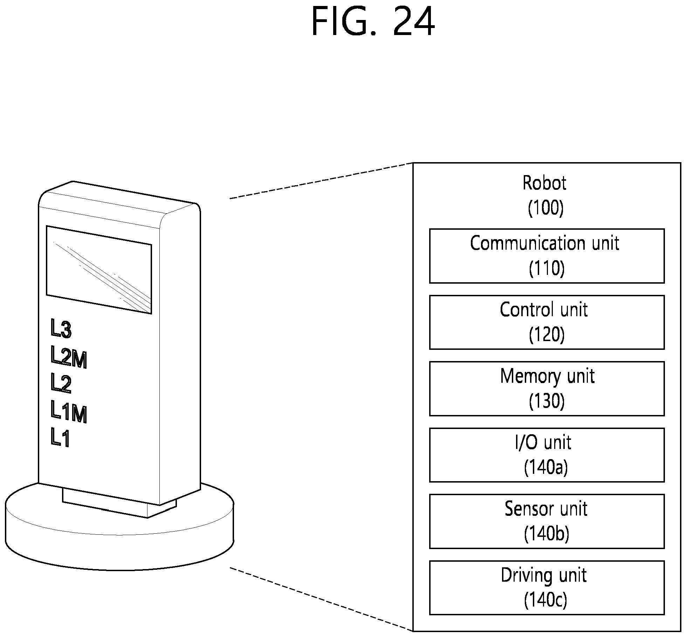

FIG. 24 shows a robot, in accordance with an embodiment of the present disclosure. The robot may be categorized into an industrial robot, a medical robot, a household robot, a military robot, and so on, according to a used purpose or field.

Referring to FIG. 24, a robot (100) may include a communication unit (110), a control unit (120), a memory unit (130), an I/O unit (140a), a sensor unit (140b), and a driving unit (140c). Herein, the blocks 110~130/140a~140c correspond to the blocks 110~130/140 of FIG. 19, respectively.

The communication unit (110) may transmit and receive signals (e.g., driving information and control signals) to and from external devices such as other wireless devices, other robots, or control servers. The control unit (120) may perform various operations by controlling constituent elements of the robot (100). The memory unit (130) may store data/parameters/programs/code/commands for supporting various functions of the robot (100). The I/O unit (140a) may obtain information from the exterior of the robot (100) and output information to the exterior of the robot (100). The I/O unit (140a) may include a camera, a microphone, a user input unit, a display unit, a speaker, and/or a haptic module. The sensor unit (140b) may obtain internal information of the robot (100), surrounding environment information, user information, and so on. The sensor unit (140b) may include a proximity sensor, an illumination sensor, an acceleration sensor, a magnetic sensor, a gyro sensor, an inertial sensor, an IR sensor, a fingerprint recognition sensor, an ultrasonic sensor, a light sensor, a microphone, a radar, and so on. The driving unit (140c) may perform various physical operations such as movement of robot joints. In addition, the driving unit (140c) may cause the robot (100) to travel on the road or to fly. The driving unit (140c) may include an actuator, a motor, a wheel, a brake, a propeller, and so on.

FIG. 27 shows an AI device, in accordance with an embodiment of the present disclosure. The AI device may be implemented by a fixed device or a mobile device, such as a TV, a projector, a smartphone, a PC, a notebook, a digital broadcast terminal, a tablet PC, a wearable device, a Set Top Box (STB), a radio, a washing machine, a refrigerator, a digital signage, a robot, a vehicle, and so on.

Referring to FIG. 27, an AI device (100) may include a communication unit (110), a control unit (120), a memory unit (130), an I/O unit (140a/140b), a learning processor unit (140c), and a sensor unit (140d). The blocks 110~130/140a~140d correspond to blocks 110~130/140 of FIG. 19, respectively.

The communication unit (110) may transmit and receive wired/radio signals (e.g., sensor information, user input, learning models, or control signals) to and from external devices such as other AI devices (e.g., 100x, 200, 400 of FIG. 16) or an AI server (e.g., 400 of FIG. 16) using wired/wireless communication technology. To this end, the communication unit (110) may transmit information within the memory unit (130) to an external device and transmit a signal received from the external device to the memory unit (130).

The control unit (120) may determine at least one feasible operation of the AI device (100), based on information which is determined or generated using a data analysis algorithm or a machine learning algorithm. The control unit (120) may perform an operation determined by controlling constituent elements of the AI device (100). For example, the control unit (120) may request, search, receive, or use data of the learning processor unit (140c) or the memory unit (130) and control the constituent elements of the AI device (100) to perform a predicted operation or an operation determined to be preferred among at least one feasible operation. The control unit (120) may collect history information including the operation contents of the AI device (100) and operation feedback by a user and store the collected information in the memory unit (130) or the learning processor unit (140c) or transmit the collected information to an external device such as an AI server (400 of FIG. 17). The collected history information may be used to update a learning model.

The memory unit (130) may store data for supporting various functions of the AI device (100). For example, the memory unit (130) may store data obtained from the input unit (140a), data obtained from the communication unit (110), output data of the learning processor unit (140c), and data obtained from the sensor unit (140). The memory unit (130) may store control information and/or software code needed to operate/drive the control unit (120).

The input unit (140a) may obtain various types of data from the exterior of the AI device (100). For example, the input unit (140a) may obtain learning data for model learning, and input data to which the learning model is to be applied. The input unit (140a) may include a camera, a microphone, and/or a user input unit. The output unit (140b) may generate output related to a visual, auditory, or tactile sense. The output unit (140b) may include a display unit, a speaker, and/or a haptic module. The sensing unit (140) may obtain at least one of internal information of the AI device (100), surrounding environment information of the AI device (100), and user information, using various sensors. The sensor unit (140) may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone, and/or a radar.

The learning processor unit (140c) may learn a model consisting of artificial neural networks, using learning data. The learning processor unit (140c) may perform AI processing together with the learning processor unit of the AI server (400 of FIG. 16). The learning processor unit (140c) may process information received from an external device through the communication unit (110) and/or information stored in the memory unit (130). In addition, an output value of the learning processor unit (140c) may be transmitted to the external device through the communication unit (110) and may be stored in the memory unit (130).

The claims set forth herein can be combined in a variety of ways. For example, the technical features of the method claims of the present specification may be combined to be implemented as a device, and the technical features of the device claims of the present specification may be combined to be implemented as a method. In addition, the technical features of the method claims of the present specification and the technical features of the device claims may be combined to be implemented as a device, and the technical features of the method claims of the present specification and the technical features of the device claims may be combined to be implemented as a method.

## Claims

1. An uplink transmission method performed by a first communication device in a wireless communication system, the method comprising:

   receiving resource configuration information from a second communication device, wherein the resource configuration information informs a location of a downlink resource, a flexible resource, and an uplink resource and maximum output power allocated to the uplink resource, and
   performing uplink transmission to the second communication device through the uplink resource based on the resource configuration information,
   wherein transmission power of the uplink transmission is less than or equal to the maximum output power.

2. The method of claim 1, wherein the resource configuration information is the first communication device-specific information.

3. The method of claim 1, wherein the first communication device receives cell-specific resource configuration information from the second communication device,
   wherein the cell-specific resource configuration information informs a cell-specific location of the downlink resource, the flexible resource, and the uplink resource.

4. The method of claim 3, wherein based on a cell-specific resource direction informed by the cell-specific resource configuration information for a first time resource being different from a resource direction informed by the resource configuration information, the first communication device uses the resource configuration information for the first time resource.

5. The method of claim 4, wherein based on the resource configuration information informing that the first time resource is the uplink resource, the first communication device performs the uplink transmission to the second communication device through the first time resource,
   wherein transmission power of the uplink transmission is less than or equal to the maximum output power.

6. The method of claim 5, wherein the cell-specific resource configuration information informs that the first time resource is the downlink resource.

7. The method of claim 6, wherein the first time resource is a resource for performing a full-duplex operation by the second communication device.

8. The method of claim 4, wherein a value of the maximum output power allocated for the first time resource is different from a value of maximum output power allocated for a second time resource,
   wherein a cell-specific resource direction indicated by the cell-specific resource configuration information for the second time resource is same as a resource direction indicated by the resource configuration information for the second time resource.

9. The method of claim 1, wherein the resource configuration information informs maximum output power allocated per resource unit for the uplink resource.

10. The method of claim 9, wherein the resource unit is a slot.

11. The method of claim 1, wherein the first communication device is an integrated access and backhaul (IAB) node, and the second communication device is a parent IAB node of the first communication device.

12. The method of claim 1, wherein the first communication device is a user equipment (UE) and the second communication device is a base station.

13. A first communication device comprising:

one or more memories storing instructions;
one or more transceivers; and
one or more processors coupling the one or more memories and the one or more transceivers, wherein the one or more processors execute the instructions for:

receiving resource configuration information from a second communication device, wherein the resource configuration information informs a location of a downlink resource, a flexible resource, and an uplink resource and maximum output power allocated to the uplink resource, and
performing uplink transmission to the second communication device through the uplink resource based on the resource configuration information,
wherein transmission power of the uplink transmission is less than or equal to the maximum output power

14. An apparatus configured to control a first communication device, the apparatus comprising:

one or more processors;
one or more memories operatively coupled to the one or more processors and storing instructions,
wherein the one or more processors execute the instructions for:

receiving resource configuration information from a second communication device, wherein the resource configuration information informs a location of a downlink resource, a flexible resource, and an uplink resource and maximum output power allocated to the uplink resource, and
performing uplink transmission to the second communication device through the uplink resource based on the resource configuration information,
wherein transmission power of the uplink transmission is less than or equal to the maximum output power

15. At least one computer readable medium (CRM) storing instructions that, based on being executed by at least one processor, perform operations comprising:

receiving resource configuration information from a communication device, wherein the resource configuration information informs a location of a downlink resource, a flexible resource, and an uplink resource and maximum output power allocated to the uplink resource, and
performing uplink transmission to the communication device through the uplink resource based on the resource configuration information,
wherein transmission power of the uplink transmission is less than or equal to the maximum output power

16. An uplink reception method performed by a second communication device in a wireless communication system, the method comprising:

transmitting resource configuration information to a first communication device, wherein the resource configuration information informs a location of a downlink resource, a flexible resource, and an uplink resource and maximum output power allocated to the uplink resource, and
receiving an uplink signal from the first communication device through the uplink resource,
wherein transmission power of the uplink signal is less than or equal to the maximum output power.

17. A second wireless device comprising:

one or more memories storing instructions;
one or more transceivers; and
one or more processors coupling the one or more memories and the one or more transceivers, wherein the one or more processors execute the instructions for:

transmitting resource configuration information to a first communication device, wherein the resource configuration information informs a location of a downlink resource, a flexible resource, and an uplink resource and maximum output power allocated to the uplink resource, and
receiving an uplink signal from the first communication device through the uplink resource,
wherein transmission power of the uplink signal is less than or equal to the maximum output power.

# FIG. 1

# FIG. 2

# FIG. 3

# FIG. 4

EP 4 236 487 A1

# FIG. 5

**gNB**
- RRM between cells
- RB control
- Connection mobility control
- Wireless access control
- Measurement setting and provision
- Dynamic resource allocation (scheduler)

NG-RAN

**AMF**
- NAS security
- Idle state mobility processing

**UPF**
- Mobility anchoring
- PDU processing

Internet

5GC

**SMF**
- UE IP address allocation
- PDU session control

# FIG. 6

# FIG. 7

Resource grid

A carrier
(up to 3300 subcarriers,
i.e., 275 RBs)

A BWP

1RB=12 subcarriers

1 RE

1subcarrier

1 symbol

1=0 • • •

k=0

# FIG. 8

Fiber transport

B

C

A

→ Backhaul link

→ Access link

# FIG. 9

(a) NGC — NG — IAB-donor gNB — NR Uu — IAB-node — NR Uu — UE
UE: SA with NGC
IAB-node: SA with NGC

(b) EPC — S1 — eNB — X2 — IAB-donor gNB — NG — NGC; eNB — LTE Uu — UE; IAB-donor gNB — NR Uu — IAB-node — NR Uu — UE
UE: NAS with EPC
IAB-node: SA with NGC

(c) EPC — S1 — eNB — X2 — IAB-donor gNB; EPC — S1-U — IAB-donor gNB; eNB — LTE Uu — UE; IAB-donor gNB — NR Uu — IAB-node — NR Uu — UE
UE: NAS with EPC
IAB-node: NAS with EPC

# FIG. 10

Relay node 2

Relay node 1

DgNB

UE 3

UE 2

UE 1

Backhaul link

Access link

# FIG. 11

IAB node 1
MT
DU

Backhaul link A

IAB node 2
MT
DU

Backhaul link B

IAB node 3
MT
DU

# FIG. 12

Carrier #0
Subband-wise Full Duplex

Carrier #0
Spectrum-Sharing Full Duplex

# FIG. 13

(a)

(b)

# FIG. 14

Receiving resource configuration information
from second communication device — S1410

Performing uplink transmission to second
communication device through uplink resource
based on resource configuration information — S1420

# FIG. 15

Transmitting resource configuration information to first communication device — S1510

Receiving uplink signal from first communication device through uplink resource — S1520

# FIG. 16

EP 4 236 487 A1

# FIG. 17

EP 4 236 487 A1

100

108    208

200

First Device

Second Device

102 — Processor(s)    Transceiver(s)

Transceiver(s)    Processor(s) — 202

Memory(s)

Memory(s)

104    106

206    204

# FIG. 18

1000(102/106, 202/206)

codewords

layers

antenna ports

| 1010 | 1020 | 1030 | 1040 | 1050 | 1060 |

Scrambler → Modulator → Layer Mapper → Precoder → Resource Mapper → Signal Generator

Scrambler → Modulator → Resource Mapper → Signal Generator

| 1010 | 1020 | 1050 | 1060 |

# FIG. 19

Device (100,200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

# FIG. 20

# FIG. 21

Car or autonomous vehicle (100)
- Communication unit (110)
- Control unit (120)
- Memory unit (130)
- Driving unit (140a)
- Power supply unit (140b)
- Sensor unit (140c)
- Autonomous driving unit (140d)

108

Device (100, 200)
- Communication unit (210)
- Control unit (220)
- Memory unit (230)
- Driving unit (140a)
- Power supply unit (140b)
- Sensor unit (140c)
- Autonomous driving unit (140d)

208

# FIG. 22

1410

Virtual World

1420

Car or autonomous vehicle
(100)

Communication unit
(110)

Control unit
(120)

Memory unit
(130)

I/O unit (140a)
(e.g., HUD)

Positioning unit (140b)
(e.g., GPS, sensor)

# FIG. 23

# FIG. 24

L3
L2M
L2
L1M
L1

Robot
(100)

Communication unit
(110)

Control unit
(120)

Memory unit
(130)

I/O unit
(140a)

Sensor unit
(140b)

Driving unit
(140c)

EP 4 236 487 A1

# FIG. 25

100

120

| 110 — Communication unit | ↔ | | ↔ | Memory unit | ~130 |
|---|---|---|---|---|---|

140a — Input unit ↔ Control unit ↔ Output unit ~140b

140c — Learning processor unit ↔ ↔ Sensor unit ~140d

<div style="text-align:center">**INTERNATIONAL SEARCH REPORT**</div>

| International application No. |
| --- |
| **PCT/KR2021/015032** |

### A. CLASSIFICATION OF SUBJECT MATTER

**H04W 52/14**(2009.01)i; **H04W 52/36**(2009.01)i; **H04W 52/24**(2009.01)i; **H04L 5/14**(2006.01)i; **H04W 84/04**(2009.01)i

According to International Patent Classification (IPC) or to both national classification and IPC

### B. FIELDS SEARCHED

Minimum documentation searched (classification system followed by classification symbols)

H04W 52/14(2009.01); H04B 7/155(2006.01); H04L 5/14(2006.01); H04L 5/16(2006.01); H04W 24/10(2009.01); H04W 72/04(2009.01); H04W 72/08(2009.01); H04W 76/15(2018.01); H04W 76/36(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 상향링크(uplink), 전력 제어(power control), 자원 설정 정보(resource configuration information), 최대 출력 전력(maximum output power), 셀 특정적(cell specific), 자원 방향(resource direction), IAB(integrated access and backhaul)

### C. DOCUMENTS CONSIDERED TO BE RELEVANT

| Category* | Citation of document, with indication, where appropriate, of the relevant passages | Relevant to claim No. |
| --- | --- | --- |
| X | US 2020-0146099 A1 (QUALCOMM INCORPORATED) 07 May 2020 (2020-05-07)<br>See paragraphs [0047]-[0075] and [0091]-[0106]; and figures 5-6. | 1,9,11-17 |
| Y | | 2-3,10 |
| A | | 4-8 |
| Y | KR 10-2020-0016814 A (LG ELECTRONICS INC.) 17 February 2020 (2020-02-17)<br>See paragraphs [0337]-[0342]. | 2-3,10 |
| A | WO 2020-139176 A1 (TELEFONAKTIEBOLAGET LM ERICSSON (PUBL)) 02 July 2020 (2020-07-02)<br>See page 1, line 25 - page 15, line 465; and figure 6. | 1-17 |
| A | US 2020-0107383 A1 (AT&T INTELLECTUAL PROPERTY I, L.P.) 02 April 2020 (2020-04-02)<br>See paragraphs [0077]-[0083]; and figures 8-12. | 1-17 |

☑ Further documents are listed in the continuation of Box C.  ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **27 January 2022** | **27 January 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

| | International application No. |
|---|---|
| | **PCT/KR2021/015032** |

**C.      DOCUMENTS CONSIDERED TO BE RELEVANT**

| Category* | Citation of document, with indication, where appropriate, of the relevant passages | Relevant to claim No. |
|---|---|---|
| A | US 2019-0305923 A1 (QUALCOMM INCORPORATED) 03 October 2019 (2019-10-03) See paragraphs [0113]-[0187]; and figures 3-7. | 1-17 |

**INTERNATIONAL SEARCH REPORT**
Information on patent family members

International application No.

**PCT/KR2021/015032**

| Patent document cited in search report | | | Publication date (day/month/year) | Patent family member(s) | | | Publication date (day/month/year) |
|---|---|---|---|---|---|---|---|
| US | 2020-0146099 | A1 | 07 May 2020 | CN | 112913304 | A | 04 June 2021 |
| | | | | EP | 3874862 | A1 | 08 September 2021 |
| | | | | WO | 2020-092813 | A1 | 07 May 2020 |
| KR | 10-2020-0016814 | A | 17 February 2020 | CN | 111066363 | A | 24 April 2020 |
| | | | | EP | 3672343 | A1 | 24 June 2020 |
| | | | | EP | 3672343 | A4 | 11 November 2020 |
| | | | | KR | 10-2187281 | B1 | 04 December 2020 |
| | | | | US | 2021-0367660 | A1 | 25 November 2021 |
| | | | | WO | 2020-032578 | A1 | 13 February 2020 |
| WO | 2020-139176 | A1 | 02 July 2020 | EP | 3903526 | A1 | 03 November 2021 |
| US | 2020-0107383 | A1 | 02 April 2020 | US | 10834773 | B2 | 10 November 2020 |
| | | | | US | 2021-0029765 | A1 | 28 January 2021 |
| | | | | WO | 2020-068318 | A1 | 02 April 2020 |
| US | 2019-0305923 | A1 | 03 October 2019 | CN | 111919486 | A | 10 November 2020 |
| | | | | EP | 3777418 | A1 | 17 February 2021 |
| | | | | JP | 2021-519540 | A | 10 August 2021 |
| | | | | KR | 10-2020-0136951 | A | 08 December 2020 |
| | | | | US | 10892883 | B2 | 12 January 2021 |
| | | | | US | 2021-0194664 | A1 | 24 June 2021 |
| | | | | WO | 2019-190637 | A1 | 03 October 2019 |

Form PCT/ISA/210 (patent family annex) (July 2019)